# EUROPEAN PATENT APPLICATION

(11) **EP 4 458 452 A1**
(43) Date of publication of application: **06.11.2024**
(21) Application number: 22915709.4
(22) Date of filing: 13.12.2022
(51) Int. Cl.: B01D 53/053, B01D 53/047, C01B 23/00

(54) **PRESSURE-FLUCTUATION-ADSORPTION-TYPE GAS SEPARATION DEVICE**

(30) Priority: 28.12.2021 JP 2021214396; 28.12.2021 JP 2021214397; 28.12.2021 JP 2021214398
(71) Applicant: Taiyo Nippon Sanso Corporation, Tokyo 142-8558 (JP)
(72) Inventor: YAMAWAKI, Masaya, Tokyo 142-8558 (JP)
(74) Representative: HGF
(86) International application number: PCT/JP2022/045874
(87) International publication number: WO 2023/127485

(57) **Abstract**

An object of the present invention is to provide a pressure swing adsorption gas separation apparatus that can separate strong adsorbate components with high purity without allowing weak adsorbate components to contaminate the strong adsorbate component-storage tank. The present invention provides a pressure swing adsorption gas separation apparatus (100) including a raw material gas-storage tank (1) that stores a mixed gas of a target component and at least one component other than the target component as a raw material gas; a strong adsorbate component-storage tank (2) that stores strong adsorbate components; a weak adsorbate component-storage tank (3) that stores strong adsorbate components; a compressor (4) that compresses a gas of the raw material gas-storage tank (1) or the strong adsorbate component-storage tank (2); a compressor (5) that compresses a gas of the strong adsorbate component-storage tank (3); and four adsorption columns of a lower column (10B), lower column (1 1B), upper column (10U), and upper column (11U).

## Description

### TECHNICAL FIELD

The present invention relates to a pressure swing adsorption gas separation apparatus.

### BACKGROUND ART

In the process of manufacturing semiconductor products such as semiconductor integrated circuits and liquid crystal panels, equipment is widely used that generates plasma by high-frequency discharge in a rare gas atmosphere and performs various treatments on semiconductor products or display devices using the generated plasma. Conventionally, argon has been used as the rare gas used in such devices.

However, in recent years, krypton and xenon have been attracting attention for their ability to perform more advanced processing. In the field of lamps, argon has traditionally been used as a filler gas in light bulbs, but in recent years, high value-added products filled with krypton or xenon have been manufactured to reduce power consumption and improve brightness. Furthermore, in the glass field, argon has conventionally been used as a filler gas for double-glazed glass, but in recent years, high value-added products using krypton have been manufactured to improve heat insulation performance.

However, krypton and xenon are extremely rare and expensive gases due to their abundance in the air as raw materials and the complexity of the separation process. Accordingly, there is a problem in that their use disrupts the supply-demand balance and significantly increases costs.

In order to make such gases economically viable, it is extremely important to recover and reuse rare gases. Note that in order to reuse a rare gas, a concentration of 99% by volume or more is required.

As a device and a method for separating xenon or krypton, a device and a method are known in which a raw material gas containing xenon or krypton and other components that are impurities is introduced into an adsorption column filled with an adsorbent which readily adsorbs xenon and krypton and does not readily adsorb the other components that are impurities, xenon and krypton which are readily adsorbed are adsorbed to the adsorbent, the other components that are not readily adsorbed are separated from xenon and krypton, and xenon and krypton which are adsorbed to the adsorbent are desorbed from the adsorbent to recover at high concentration.

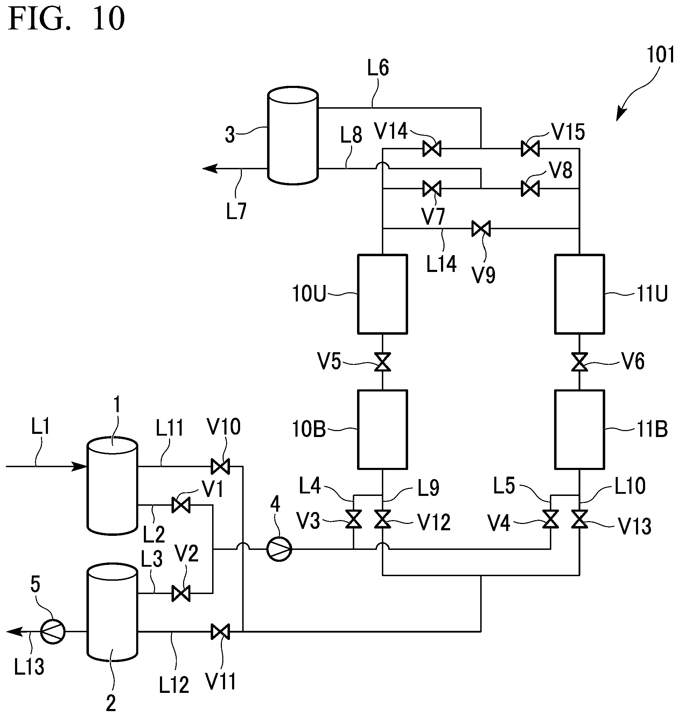

Patent Document 1 discloses a pressure swing adsorption gas separation method in which the following steps a to e are sequentially carried out according to a sequence, and a pressure swing adsorption gas separation apparatus 101 (FIG. 10) for carrying out the method:
step a: a raw material gas from a raw material gas-storage tank 1 is compressed by a compressor 4 and introduced into two adsorption columns (upper column 10U (11U) and lower column 10B (1 1B)) connected in series, and xenon or krypton, which is a strong adsorbate component, is adsorbed to the adsorbent in the adsorption columns, and impurities which are weak adsorbate components are separated;
step b: xenon or krypton filled in a strong adsorbate component-storage tank 2 is compressed by the compressor 4 and introduced into the lower column 10B (11B), the impurities that are weak adsorbate components remaining in the voids in the lower column 10B (11B) are led out into the upper column 10U (11U), xenon or krypton, which is a strong adsorbate component, is adsorbed in the upper column 10U (11U), and impurities that are weak adsorbate components are led out from the upper column 10U (11U) and recovered,
step c: the lower column 10B (11B) is decompressed, xenon or krypton which is the strong adsorbate component is desorbed from the adsorbent, and recovered in the strong adsorbate component-storage tank 2;
step d: the upper column 10U (11U) is decompressed, the components adsorbed to the adsorbent are desorbed and introduced into the lower column 10B (1 1B), and the gas which is led out from the lower column 10B (11B) is recovered in the raw material gas-storage tank 1; and
step e: the impurities, which are the weak adsorbate components recovered in the previous step, are introduced into the upper column 10U (11U), and xenon or krypton which is the strong adsorbate component is desorbed from the adsorbent and introduced into the lower column 10B (11B), and gas led out from the lower column 10B (11B) is recovered in the raw material gas-storage tank 1.

The lower column 10B (11B) of the pressure swing adsorption gas separation apparatus 101 shown in FIG, 10 is connected to a line L4 (L5) which introduces the raw material gas from the raw material gas-storage tank 1 or the gas from the strong adsorbate component-storage tank 2 into the lower column 10B (11B) after pressurizing them, a line (no reference numeral) connecting between the lower column 10B (11B) and the upper column 10U (11U), and a line L9 which decompresses and discharges the gas from the lower column 10B (11B) into the raw material gas-storage tank 1 or the strong adsorbate component-storage tank 2. The line L9 branches into a line L11 which is connected to the raw material gas-storage tank 1, and a line L12 which is connected to the strong adsorbate component-storage tank 2. Each line is provided with an on-off valve that controls the flow of gas.

In the step a, on-off valves V1 and V3 are opened, which are installed in lines L2 and L4 that connect between the raw material gas-storage tank 1 and the lower column 10B, and compress the raw material gas in the raw material gas-storage tank by a compressor 4, and introduces the compressed raw material gas into the lower column 10B, and an on-off valve V5 is opened, which is installed in the line (no reference numeral) that connects between the lower column 10B and the upper column 10U, and other on-off valves are closed. In the step b, on-off valves V2 and V3 are opened, which are installed in lines L3 and L4 that compress gas in the strong adsorbate component-storage tank 2 by the compressor 4 and introduce the compressed gas into the lower column 10B, and on-off valve V5 is opened, which is installed in the line (no reference numeral) that connects between the lower column 10B and the upper column 10U, and other on-off valves are closed. In the step c, on-off valves V12 and V11 are opened, which are installed in lines L9 and L12 that connect between the lower column 10B and the strong adsorbate component-storage tank 2, and the other on-off valves are closed. By lowering the pressure in the lower column 10B, the strong adsorbate component adsorbed by the adsorbent is desorbed and discharged into the strong adsorbate component-storage tank 2. In the steps d and e, the on-off valves V12 and V10 are opened which are installed in the lines L9 and L11 that connects between the lower column 10B and the raw material gas-storage tank 1, and on-off valve V5 is opened, which is installed in the line (no reference numeral) that connects between the lower column 10B and the upper column 10U, and other on-off valves are closed.

### PRIOR ART DOCUMENTS

### PATENT DOCUMENTS

Patent Document 1 Japanese Unexamined Patent Application, First Publication No. 2006-061831

### SUMMARY OF INVENTION

### PROBLEM TO BE SOLVED BY THE INVENTION

The pressure swing adsorption gas separation apparatus 101 (FIG. 10) shown in FIG. 1 of Patent Document 1 has the following problems.

The lines L9 and L11 which connect the lower column 10B and the raw material gas-storage tank 1 and decompress and discharge the gas from the lower column 10B into the raw material gas-storage tank 1 and the lines L9 and L12 which connect the lower column 10B and the strong adsorbate component-storage tank 2 and decompress and discharge the gas from lower column 10B into the strong adsorbate component-storage tank 2 share a common pipe as a decompressing and discharging line. In this configuration, the components which have desorbed from the adsorbent in the upper column 10U in the step d and are discharged from the lower column 10B in the step c, and the weak adsorbate component which has been introduced into the upper column 10U and is discharged from the lower column 10B in the step e exist in the common pipe above. Therefore, at the start of step c, the weak adsorbate component is discharged into the strong adsorbate component-storage tank 2. Since the weak adsorbate component is mixed into the strong adsorbate component-storage tank 2, the purity of the strong adsorbate component in the strong adsorbate component-storage tank 2 decreases.

The problem above will be explained more specifically. In the step a described above, as shown in FIG. 1 of Patent Document 1 (FIG. 10 in the present application), the raw material gas which is introduced from the raw material gas-storage tank 1 into the lower column 10B passes through the pipe between the on-off valve 12 and the lower column 10B on the line L9.

Next, in the step b described above, the strong adsorbate gas component in the strong adsorbate component-storage tank 2 is introduced into the lower column 10B through the line L4. However, the raw material gas exists in the pipe of the line L9, between the on-off valve V12 and the lower column 10B and near the on-off valve V12, because the strong adsorbate component gas does not flow.

As a result, in the step c described above, the raw material gas existing between the on-off valve V12 and the lower column 10B and near the on-off valve V12 in the pipe L9 is discharged into the strong adsorbate component-storage tank 2. The weak adsorbate components contained in the raw material gas are impurities to the strong adsorbate component gas in the strong adsorbate component-storage tank 2, so it becomes a factor that reduces the purity of the separated strong adsorbate component. In particular, when the concentration of the weak adsorbate component in the raw material gas is high, even if the volume between the on-off valve V12 and the lower column 10B in the pipe L9 described above is small, it becomes a very large factor in reducing the purity.

Furthermore, the separation method and apparatus disclosed in Patent Document 1 have the following problems.

The compressor compresses the gas in the raw material gas-storage tank in the step a, and also compresses xenon of krypton in the strong adsorbate component-storage tank in the step b. When there is a dead-end space such as a branch pipe in the flow path from the strong adsorbent component-storage tank to the compressor, the gas from the raw material gas-storage tank that has flowed in the step a remains in the dead-end space. Then, the gas which is supplied from the raw material gas-storage tank and remains in the dead-end space contaminates xenon or krypton which is supplied from the strong adsorbate component-storage tank and is compressed in the step b. Since the gas in the raw material gas-storage tank contains impurities that are weak adsorbate components at a high concentration, the impurities are mixed with the xenon or krypton in the strong adsorbate component-storage tank that is compressed in step b. When xenon of krypton introduced into the lower column in the step b contains impurities, the impurities remaining in the voids of the lower column cannot be led out into the upper column and remain in the lower column.

Therefore, in the step c, the xenon or krypton containing residual impurities is recovered in the strong adsorbate component-storage tank while still containing residual impurities. The xenon or krypton introduced into the lower column in the next step b contains impurities, and the impurities remaining in the volume of the dead-end space are also added. This increases the concentration of impurities contained in the xenon or krypton recovered in the strong adsorbate component-storage tank in the step c.

By repeating these steps, the concentration of xenon or krypton recovered in the strong adsorbate component-storage tank will be greatly reduced.

An object of the present invention is to provide a pressure swing adsorption gas separation apparatus that can separate strong adsorbate components with high purity without allowing weak adsorbate components to contaminate the strong adsorbate component-storage tank.

### MEANS FOR SOLVING THE PROBLEM

[1] A pressure swing adsorption gas separation apparatus which separates a main component from a raw material gas, which is a mixed gas containing at least two main components using a pressure swing adsorption gas separation method,
   wherein the separation apparatus includes:
   at least one adsorption column that is filled with an adsorbent that readily adsorbs at least one main component of the raw material gas and hardly adsorbs at least one main component of the raw material gas;
   a raw material gas-storage tank that stores the raw material gas;
   a strong adsorbate component-storage tank that stores readily adsorbable components that are desorbed from the adsorbent in the adsorption column;
   at least one compressor that sucks and compresses at least one of gas in the raw material gas-storage tank and gas in the strong adsorbate component-storage tank in order to introduce at least one of the gas in the raw material gas-storage tank and the gas in the strong adsorbate component-storage tank into one of the adsorption column;
   a gas flow path that returns gas discharged from the adsorption column into the strong adsorbate component-storage tank; and
   a gas flow path that returns gas discharged from the adsorption column into the raw material gas-storage tank, and
   wherein the gas flow path that returns the gas discharged from the adsorption column into the strong adsorbate component-storage tank is a first exclusive flow path of which a first end is connected to the adsorption column and a second end is only connected to the strong adsorbate component-storage tank.
[2] The pressure swing adsorption gas separation apparatus according to [1],
   wherein the first end of the first exclusive flow path is connected to the adsorption column through a gas flow path which introduces gas from the compressor into the adsorption column.
[3] The pressure swing adsorption gas separation apparatus according to [1],
   wherein the pressure swing adsorption gas separation apparatus further includes a second exclusive flow path of which a first end is connected to the adsorption column and a second end is only connected to the raw material gas-storage tank.
[4] The pressure swing adsorption gas separation apparatus according to [3],
   wherein the first end of the second exclusive flow path is connected to the adsorption column through a gas flow path that introduces gas from the compressor into the adsorption column.
[5] The pressure swing adsorption gas separation apparatus according to [1],
   wherein the pressure swing adsorption gas separation apparatus includes:
   a first flow path that is located between the compressor and the adsorption column;
   a second flow path that branches from the first flow path at a first branching point and is located between the first branching point and the strong adsorbate component-storage tank; and
   a first on-off device located in the second flow path, and
   wherein the first on-off device is located near the first branching point.
[6] The pressure swing adsorption gas separation apparatus according to [5],
   wherein the first branching point is located near the adsorption column.
[7] The pressure swing adsorption gas separation apparatus according to [5] or [6],
   wherein the pressure swing adsorption gas separation apparatus further includes:
   a third flow path that is branched from the first flow path at a second branching point and located between the second branching point and the raw material gas-storage tank; and
   a second on-off device that is located in the third flow path, and
   wherein the second on-off device is located near the second branching point.
[8] The pressure swing adsorption gas separation apparatus according to [7],
   wherein the second branching point is located near the adsorption column.
[9] The pressure swing adsorption gas separation apparatus according to [1],
   wherein the pressure swing adsorption gas separation apparatus includes:
   a flow path that is branched at a branching point into a first flow path connecting with the adsorption column, a second flow path connecting with the raw material gas-storage tank, and a third flow path connecting with the strong adsorbate component-storage tank;
   a compressor located in the flow path; and
   a first on-off device located in the second flow path, and
   wherein the first on-off device is located near the branching point.
[10] The pressure swing adsorption gas separation apparatus according to [9],
   wherein the volume of the second flow path from the inside of the first on-off device to the branching point is 1*%* by volume or less with respect to a gas volume sucked by the compressor per minute.
[11] The pressure swing adsorption gas separation apparatus according to [9] or [10],
   wherein the pressure swing adsorption gas separation apparatus further includes a second on-off device that is located in the third flow path, and
   wherein the third flow path is located near the branching point.
[12] The pressure swing adsorption gas separation apparatus according to any one of [9] to [11],
   wherein the compressor is located near the branching point in the first flow path.
[13] The pressure swing adsorption gas separation apparatus according to [11],
   wherein the compressors include a first compressor that is located on a primary side of the first on-off device in the second flow path, and a second compressor that is located on a primary side of the second on-off device in the third flow path.
[14] The pressure swing adsorption gas separation apparatus according to any one of [1] to [13],
   wherein the raw material gas contains at least one strong adsorbate component selected from the group consisting of xenon and krypton, and at least one weak adsorbate component selected from the group consisting of oxygen, nitrogen, argon, helium, neon and hydrogen.

### EFFECTS OF THE INVENTION

According to the present invention, it is possible to provide a pressure swing adsorption gas separation apparatus that can reduce the amount of weak adsorbate component contaminates the strong adsorbate component-storage tank, and separate the strong adsorbate component with high purity.

### BRIEF DESCRIPTION OF DRAWINGS

[FIG. 1] FIG. 1 is a schematic diagram showing a pressure swing adsorption gas separation apparatus according to the present invention.
[FIG. 2] FIG. 2 is a process diagram showing a half cycle of a gas separation method using a pressure swing adsorption gas separation apparatus according to the present invention.
[FIG. 3] FIG. 3 is a process diagram showing the other half cycle of the gas separation method using a pressure swing adsorption gas separation apparatus according to the present invention.
[FIG. 4] FIG. 4 is a process diagram showing a half cycle of a gas separation method using a pressure swing adsorption gas separation apparatus according to the present invention.
[FIG. 5] FIG. 5 is a process diagram showing the other half cycle of the gas separation method using a pressure swing adsorption gas separation apparatus according to the present invention.
[FIG. 6] FIG. 6 is a schematic diagram showing a pressure swing adsorption gas separation apparatus according to a second embodiment of the present invention.
[FIG. 7] FIG. 7 is a schematic diagram showing the configuration of a pressure swing adsorption gas separation apparatus according to a third embodiment of the present invention.
[FIG. 8] FIG. 8 is a schematic diagram showing a pressure swing adsorption gas separation apparatus according to a fourth embodiment of the present invention.
[FIG. 9] FIG. 9 is a schematic diagram showing a modification of the pressure swing adsorption gas separation apparatus according to a fourth embodiment of the present invention.

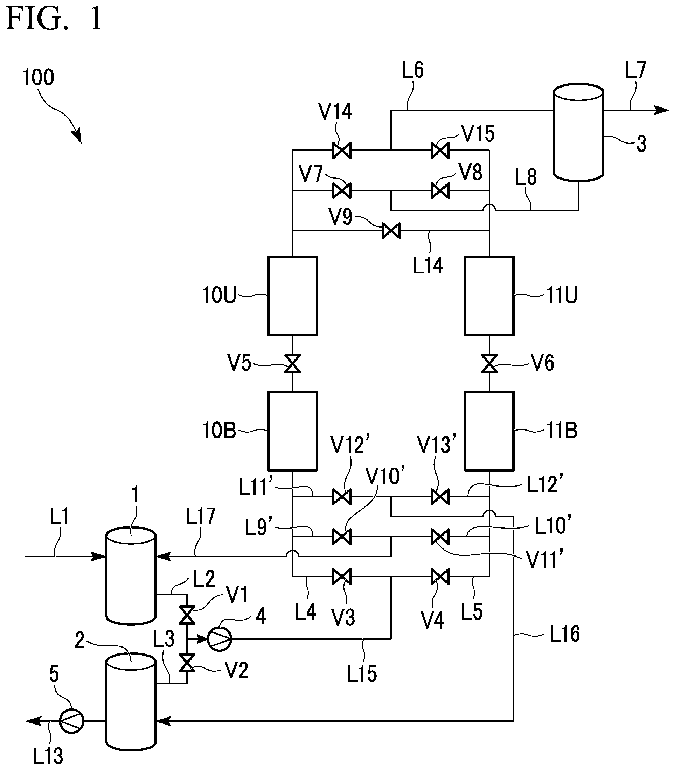

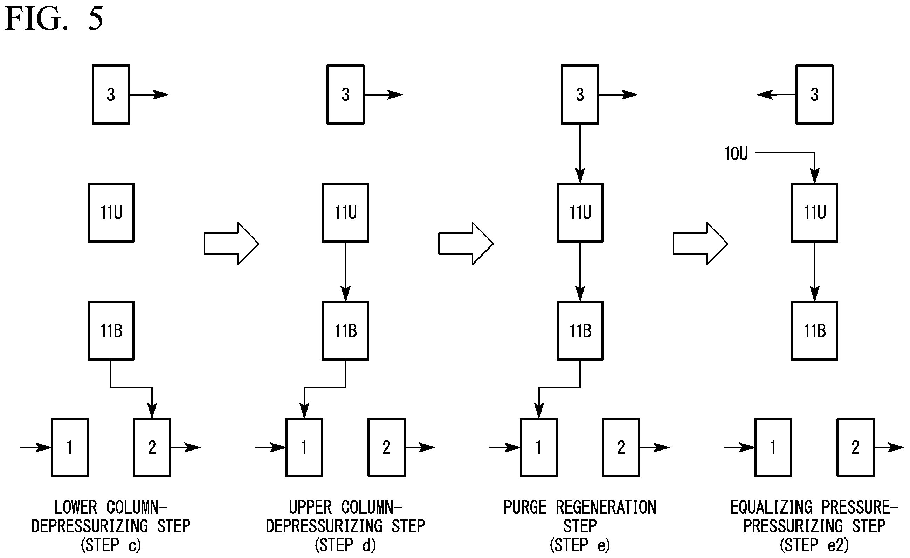

[FIG. 5] FIG. 10 is a schematic diagram showing a pressure swing adsorption gas separation apparatus shown in FIG. 1 of Patent Document 1 (Japanese Patent Laid-Open No. 2006-061831).

### DETAILED DESCRIPTION OF THE PREFERRED EMBODIMENTS

Hereinafter, embodiments of a pressure swing adsorption gas separation apparatus according to the present invention will be described in detail with reference to the drawings as appropriate, but the present invention is not limited to the embodiments described later, and various modifications can be made without departing from the gist of the present invention.

### <First embodiment>

### [Pressure swing adsorption gas separation apparatus]

A pressure swing adsorption gas separation apparatus 100 according to the present embodiment shown in FIG. 1 includes: a raw material gas-storage tank 1 that stores a mixed gas containing a target component and at least one other component; a strong adsorbate component-storage tank 2 that stores strong adsorbate components; a weak adsorbate component-storage tank 3 that stores weak adsorbate components; a compressor 4 that compresses gas in the raw material gas-storage tank 1 or the strong adsorbate component-storage tank 2; a compressor 5 that compresses gas in the strong adsorbate component-storage tank 2; and four adsorption columns, lower column 10B, lower column 11B, upper column 10U, and upper column 11U, each filled with an adsorbent that readily adsorbs at least the target component and hardly adsorbs other components.

A line L1 is a gas flow path that introduces a raw material gas into the raw material gas-storage tank 1.

A line L2 is a gas flow path that introduces the gas from the raw material gas-storage tank 1 into the compressor 4.

A line L3 is a gas flow path that introduces gas from the strong adsorbate component-storage tank 2 into the compressor 4.

A line L4 and a line L5 are gas flow paths that introduce gas from the compressor 4 into each of the lower column 10B and lower column 11B.

A line L6 is a gas flow path that introduces gas from the upper column 10U and upper column 11U into the weak adsorbate component-storage tank 3.

A line L7 is a gas flow path that supplies weak adsorbate component from the weak adsorbate component-storage tank 3 to the outside of the apparatus 100.

A line L8 is a gas flow path that introduces the weak adsorbate component from the weak adsorbate component-storage tank 3 into the upper column 10U and upper column 11U as a countercurrent purge gas.

A line L9' and a line L10' are gas flow paths that send gas from the lower column 10B and lower column 11B into line L17.

A line L11' and a line L12' are gas flow paths that send gas from the lower column 10B and lower column 11B into line L16.

A line L13 is a gas flow path that supplies a strong adsorbate component from the strong adsorbate component-storage tank 2 to the outside of the apparatus 100.

A line L14 is a pressure equalization line that equalizes the pressure between the upper column 10U and upper column 11U.

A line L15 is a gas flow path that sends the gas from the compressor 4 into the line L4 or the line L5.

A line L16 is a gas flow path that returns gas from line L11' and line L12' into the strong adsorbate component-storage tank 2. The line L16 is a first exclusive flow path which is independent from other flow paths, of which a first end is connected to the lower column 10B or the lower column 11B by a combination with line the L11' or the line L12', and of which a second end is connected only to the strong adsorbate component-storage tank 2. The first end of the line L16, which is the first exclusive flow path, is connected to the lower column 10B or the lower column 11B through the line L4 (line L5) that introduces the gas from the compressor 4 into the lower column 10B (11B) of the adsorption column.

A line L17 is a gas flow path that returns gas from the line L9' and the line L10' into the raw material gas-storage tank 1. The line L17 is a second exclusive flow path which is independent from other flow paths, of which a first end is connected to the lower column 10B or the lower column 11B by a combination with line L9' or line L10', and of which a second end is connected only to the raw material gas-storage tank 1. The first end of the line L17, which is the second exclusive flow path, is connected to the lower column 10B or the lower column 11B through the line L4 (line L5) that introduces the gas from the compressor 4 into the lower column 10B (11B) of the adsorption column.

Note that the connection point of the line L16, which is the first exclusive flow path to the line L4 (L5), is closer to the lower column 10B (11B) than the connection point of line L17, which is the second exclusive flow path to the line L4 (L5).

### [Gas separation method]

Next, using the pressure swing adsorption gas separation apparatus 100 described above, a separation method for separating xenon, which is a target component, and nitrogen, which is a component other than the target component, from a mixed gas containing xenon (target component) and nitrogen (components other than the target component) will be described as one embodiment.

In the present embodiment, activated carbon, which is an equilibrium separation type adsorbent, is used as the adsorbent filled in the lower column 10B, lower column 11B, upper column 10U, and upper column 11U. Activated carbon has a large amount of xenon adsorbed and a small amount of nitrogen adsorbed as an equilibrium adsorption amount. That is, xenon is a strong adsorbate component and nitrogen is a weak adsorbate component.

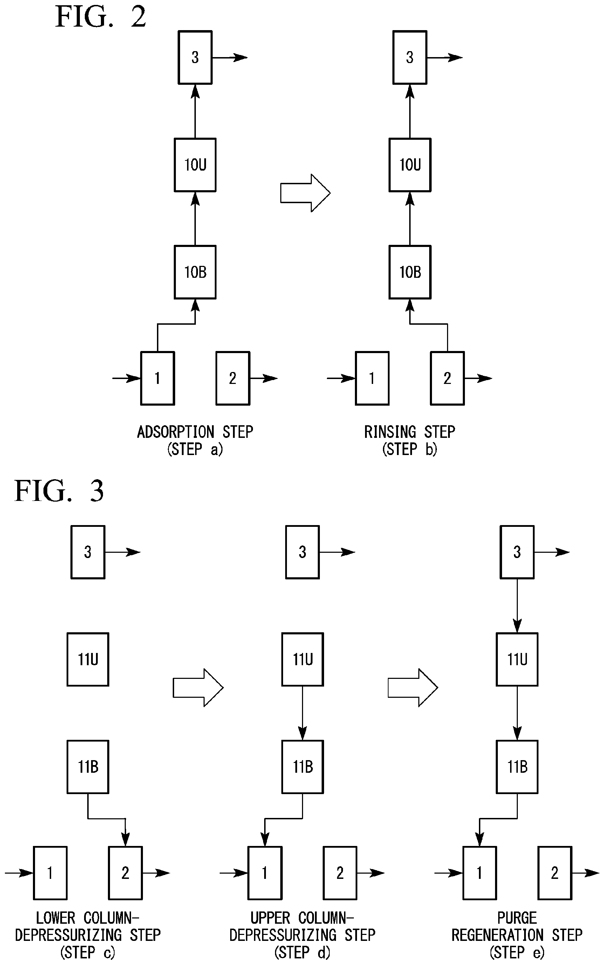

FIG. 2 shows a half-cycle of a gas separation method using the pressure swing adsorption gas separation apparatus 100 shown in FIG. 1, and consists of two steps: an adsorption step (step a) and a rinsing step (step b).

### (1) Adsorption step (step a)

An on-off valve V2, on-off valve V4, on-off valve V9, on-off valve V15, on-off valve V 10', on-off valve V12' and on-off valve V7 are closed, and an on-off valve V1, on-off valve V3, on-off valve V5 and on-off valve V14 are opened. The mixed gas from the raw material gas-storage tank 1 is compressed by the compressor 4 and introduced into the lower column 10B through the line L2, line L15, and line L4. Note that the on-off valve V14 may be closed until the pressure of the upper column 10U equals that of the weak adsorbate component-storage tank 3, and the upper column 10U may be compressed only by supplying the mixed gas from the raw material gas-storage tank 1.

Since the lower column 10B and the upper column 10U can be connected by opening the on-off valve V5, the pressure increases in the lower column 10B and the upper column 10U in almost the same way. The mixed gas in the raw material gas-storage tank 1 is a mixed gas of the raw material gas introduced from line L1 and gas discharged from the lower column 10B or the lower column 11B in an upper column decompression step and a purge regeneration step, which will be described later.

As the mixed gas supplied into the lower column 10B reaches the upper part of the lower column 10B, xenon is preferentially adsorbed and nitrogen is concentrated in the gas phase. The concentrated nitrogen is introduced from the lower column 10B into the upper column 10U, at which a trace amount of xenon contained in the concentrated nitrogen is further adsorbed. After the pressure in the upper column 10U becomes higher than the pressure in the weak adsorbate component-storage tank 3, the nitrogen further concentrated in the upper column 10U is led out into the weak adsorbate component-storage tank 3 through the line L6. The nitrogen in the weak adsorbate component-storage tank 3 is discharged from the line L7 to the outside of the apparatus at a flow rate corresponding to the flow rate of nitrogen contained in the raw material gas, and the remaining gas is used as a countercurrent purge gas in the purge regeneration process.

### (2) Rinsing step (step b)

The on-off valve V1, on-off valve V4, on-off valve V9, on-off valve V15, on-off valve V 10', on-off valve V 12', and on-off valve V7 are closed, and the on-off valve V2, on-off valve V3, on-off valve V5 and on-off valve V14 are opened. Thereby, xenon from the strong adsorbate component-storage tank 2 is introduced into the lower column 10B. By introducing the xenon from the strong adsorbate component-storage tank 2 into the lower column 10B, the nitrogen co-adsorbed in the adsorbent filled in the lower column 10B and the nitrogen existing in voids between the adsorbents are forced out into the upper column 10U, and the inside of the lower column 10B is filled with xenon. During this time, nitrogen is continuously discharged from the upper column 10U into the weak adsorbate component-storage tank 3. A portion of the nitrogen in the weak adsorbate component-storage tank 3 is discharged outside the apparatus and the remainder is used as the countercurrent purge gas as in the adsorption step (step a) described above.

FIG. 3 shows the other half cycle of the pressure swing adsorption gas separation apparatus 100 shown in FIG. 1, and consists of three steps: a lower column depressurizing step (step c), an upper column depressurizing step (step d), and a purge regeneration step (step e). Note that while the lower column 10B and upper column 10U are carrying out the previous two steps shown in FIG. 2, the lower column 11B and upper column 11U are carrying out the three steps shown in FIG. 3.

### (3) Lower column-depressurizing step (step c)

The on-off valve V4, on-off valve V6, on-off valve V11', and on-off valve V12' are closed, and the on-off valve V13' is opened. As a result, the xenon adsorbed in the lower column 11B during the adsorption step (step a) and the rinsing step (step b) described above is recovered in the strong adsorbate component-storage tank 2 through the line L12' and the line L16 due to the differential pressure between the lower column 11B and the strong adsorbate component-storage tank 2. The gas flow path comprised of the line L12' and the line L16 is an exclusive flow path that is independent from other gas flow paths. Since gas containing the weak adsorbate component from other gas flow paths does not flow in the exclusive flow path, xenon purity of the gas that is recovered in the strong adsorbate component-storage tank 2 is extremely high, and there are extremely few impurities.

The xenon recovered in the strong adsorbate component-storage tank 2 is compressed by the compressor 5 and collected as a product from the line L13. The remaining xenon is used in the rinsing step (step b) as a co-current purge gas. During this time, the upper column 11U is in a resting state because the on-off valve V6, the on-off valve V8, the on-off valve V9, and the on-off valve V15 are closed.

### (4) Upper column-depressurizing step (step d)

The on-off valve V4, on-off valve V8, on-off valve V9, on-off valve V10', on-off valve V13', and on-off valve V15 are closed, and the on-off valve V6 and on-off valve V11 ' are opened. As a result, a pressure difference is generated between the upper column 11U, which has been in a resting state in the lower column-depressurizing step (step c), and the lower column 11B, which has been decompressed, so that the gas in the upper column 11U flows into the lower column 11B. The gas introduced into the lower column 11B is recovered in the raw material gas-storage tank 1 through the line L10' and the line L17 while purging the inside of the lower column 11B. The gas flow path comprised of the line L10' and the line L17 is an exclusive flow path that is independent from other gas flow paths, and gas from other gas flow paths is not introduced thereinto. Accordingly, the xenon concentration in the gas flowing through the gas flow path comprised of the line L10' and the like L17 does not change significantly. Therefore, the xenon concentration in the gas stored in the raw material gas-storage tank 1 is stabilized.

The gas recovered in the raw material gas-storage tank 1 is remixed with the raw material gas introduced from line L1, and is again supplied into the lower column during the adsorption step (step a).

### Purge regeneration step (step e)

The on-off valve V4, on-off valve V8, on-off valve V9, on-off valve V10', and on-off valve V13' are closed, and the on-off valve V6, on-off valve V 11', and on-off valve V15 are opened. The nitrogen stored in the weak adsorbate component-storage tank 3 is introduced into the upper column 11U through the line L8 as a counter-current purge gas. The nitrogen introduced into the upper column 11U displaces and desorbs the adsorbed xenon as it moves toward the bottom of the adsorption column. The desorbed gas containing a relatively large amount of xenon is recovered in the raw material gas-storage tank 1 through the lower column 11B, the line L10', and line the L17.

The gas recovered in the raw material gas-storage tank 1 is mixed with the raw material gas introduced from the line L1 in the same way as in the upper column-depressurizing step (step d), and is then returned again into the lower column during the adsorption step (step a).

As the nitrogen used for the counter-current purge gas, the nitrogen which is led out from the upper column 10U in the adsorption step (step a) or the rinsing step (step b) may be directly introduced into the upper column (the on-off valve V8 is closed, and the on-off valve V9 is opened) during the purge regeneration step (step e) without introducing into the weak adsorbate component-storage tank 3.

By sequentially repeating the above-described five steps in the lower column 10B and upper column 10U, and in the lower column 11B and upper column 11U, nitrogen and xenon can be continuously concentrated. Note that while the adsorption step (step a) to the rinsing step (step b) are carried out in the lower column 10B and the upper column 10U, the lower column-depressurizing step (step c) to the purge regeneration step (step e) are carried out in the lower column 11B and the upper column 11U. Furthermore, while the lower column-depressurizing step (step c) to the purge regeneration step (step e) are carried out in the lower column 10B and the upper column 10U, the adsorption step (step a) to the rinsing step (step b) are carried out in the lower column 11b and the upper column 11U.

Note that the introduction of the raw material gas from the line L1, the discharge of nitrogen from the line L7, and the leading-out of xenon from the line L13 are carried out continuously regardless of the step.

However, in the manufacturing equipment for semiconductor products or display apparatuses to which the gas separation method using the pressure swing adsorption gas separation apparatus 100 of the present embodiment is applied, situations may frequently occur in which there is no need to use xenon, that is, no exhaust gas as the raw material gas flows from the manufacturing facility. In such a situation, in the pressure swing adsorption gas separation apparatus 100 of the present embodiment, the nitrogen led out from the line L7 and the xenon led out from the line L13 are returned into the raw material gas-storage tank 1 (this situation is not shown in figures), so that the supply can be stopped while maintaining the state in which the product gas can be supplied.

Furthermore, as will be described later, the pressurizing power can be saved by carrying out an equalizing pressure-depressurizing step (step b2) after the rinsing step (step b) or carrying out the equalizing pressure-pressurizing step (step b2) after the purge regeneration step (step e).

### (6) Equalizing pressure-depressurizing step (step b2)

The on-off valve V14 is closed and the on-off valve V9 is opened. The gas in the upper column 10U is introduced into the upper column 11U through the line L14 due to the pressure difference between the upper columns 10U and 11U (equalizing-depressurizing operation). As a result, the pressure in the upper column 10U decreases, so that the gas in the lower column 10B is led out into the upper column 10U. By this operation, a small amount of nitrogen remaining in the upper part of the lower column 10B is swept away by the xenon desorbed by the depressurizing and introduced into the upper column 10U. During this time, the supply of xenon from the strong adsorbate component-storage tank 2 is continued.

### (7) Equalizing pressure-pressurizing step (step e2)

The on-off valve V4, on-off valve V8, on-off valve V 11', on-off valve V 13', and on-off valve V15 are closed, and the on-off valve V9 is opened. As a result, the gas in the upper column 10U is introduced into the upper column 11U (equalizing-pressurizing operation). Since the gas introduced into the upper column 11U has a high nitrogen concentration, the xenon in the upper column 11U can be forced down to the lower part of the upper column 11U and the lower column 11B.

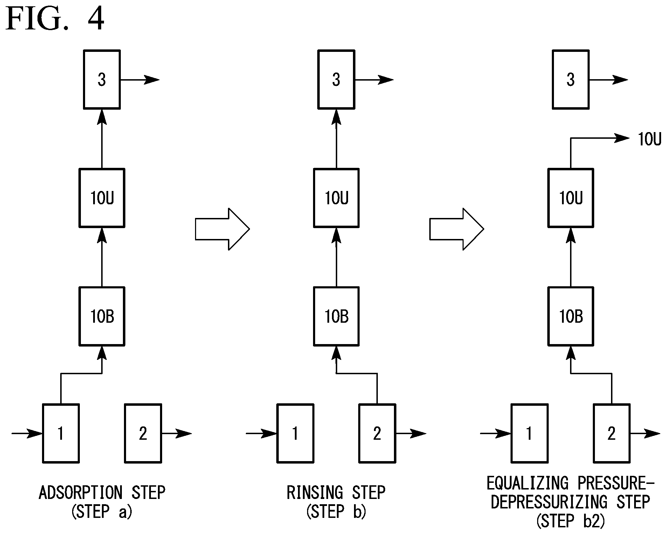

FIG. 4 shows steps in a half cycle of a gas separation method using the pressure swing adsorption gas separation apparatus 100 of the present embodiment, and are an equalizing pressure-depressurizing step (step b2) in addition to the adsorption step (step a) to the rinsing step (step b).

FIG. 5 shows the steps in the other half cycle, in which an equalizing pressure-pressurizing step (step e2) is added from the lower column-depressurizing step (step c) to the purge regeneration step (step e).

While the lower column 10B and upper column 10U carry out the three steps shown in FIG. 4, the lower column 11B and upper column 11U carry out the four steps shown in FIG. 5.

As the adsorbent used in the pressure swing adsorption gas separation apparatus of the present embodiment, both an equilibrium separation type adsorbent (adsorbent with selectivity due to a difference in equilibrium adsorption amount) and a rate separation type adsorbent (adsorbent with selectivity due to a difference in adsorption rate) can be used.

Activated carbon, which is an example of the equilibrium separation type adsorbent, adsorbs xenon 10 times more than nitrogen or argon (298 K, 100 kPa (abs)).

In molecular sieve carbon (MSC), which is an example of the rate separation type adsorbent, the adsorption rate ratio of oxygen and nitrogen is around 15.

When activated carbon is used as the adsorbent, the strong adsorbate component is, for example, at least one selected from the group consisting of xenon and krypton, and the weak adsorbate component is, for example, at least one selected from the group consisting of oxygen, nitrogen, argon, helium, neon, and hydrogen.

When MSC is used as the adsorbent, the strong adsorbate component is, for example, oxygen, and the weak adsorbate component is, for example, nitrogen.

The strong adsorbate component and the weak adsorbate component differ depending on the adsorbent used. When the adsorbent is different, the strong adsorbate component may become the weak adsorbate component, and the weak adsorbate component may become the strong adsorbate component. For example, in a case of an equilibrium separation type adsorbent such as activated carbon, Na-X type zeolite, Ca-X type zeolite, Ca-A type zeolite, Li-X type zeolite, or the like is used, examples of the strong adsorbate component include xenon, and krypton, and examples of the weak adsorbate component include nitrogen, oxygen, hydrogen, helium, neon, and argon. Further, in a case of rate separation type adsorbents such as Na-A zeolite and MSC is used, examples of the strong adsorbate component include nitrogen, oxygen, and argon, and examples of the weak adsorbate component include krypton, and xenon.

### <Effects>

In the pressure swing adsorption gas separation apparatus of the present invention, the gas flow path which introduces the strong adsorbate component from the adsorption columns (lower column 10B, lower column 11B) into the strong adsorbate component-storage tank 2 is the exclusive flow path (first exclusive flow path) of which the first end is connected to the adsorption column and the second end is connected only to the strong adsorbate component-storage tank 2. Specifically, the pressure swing adsorption gas separation apparatus of the present invention includes the exclusive flow path (first exclusive flow path) of which the first end is connected to the adsorption column through the gas flow path L4 that introduces the gas from the compressor 4 into the adsorption column, and the second end is connected only to the strong adsorbate component-storage tank 2. Thereby, the amount of the weak adsorbate component introduced into the strong adsorbate component-storage tank 2 can be reduced, and a highly purified strong adsorbate component can be obtained from the strong adsorbate component-storage tank 2.

In addition, the gas flow path that introduces the weak adsorbate component from the adsorption column (lower column 10B, lower column 11B) into the raw material gas-storage tank 1 is the exclusive flow path (second exclusive flow path) of which the first end is connected to the adsorption column, and the second end is connected only to the raw material gas-storage tank 3. Specifically, the pressure swing adsorption gas separation apparatus of the present invention includes the exclusive flow path (second exclusive flow path) of which the first end is connected to the adsorption column through the gas flow path L4 that introduces the gas from the compressor 4 into the adsorption column, and the second end is connected only to the raw material gas-storage tank 3. Thereby, the amount of the weak adsorbate component introduced into the strong adsorbate component-storage tank 2 can be reduced, and a highly purified strong adsorbate component can be obtained from the strong adsorbate component-storage tank 2.

### <Second embodiment>

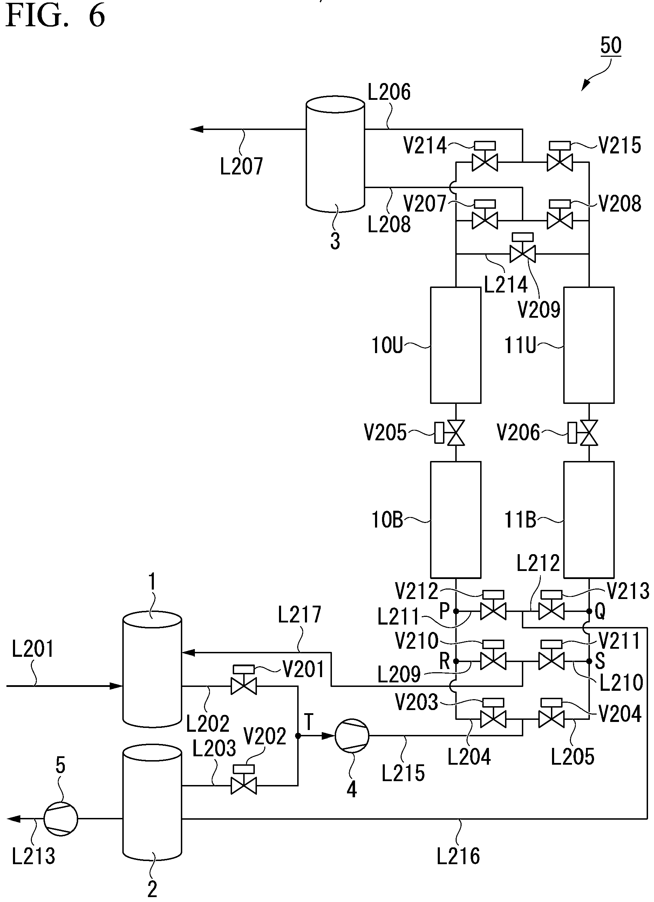

A pressure swing adsorption gas separation apparatus according to a second embodiment of the present invention will be described with reference to the drawings. FIG. 6 is a schematic diagram showing the configuration of a pressure swing adsorption gas separation apparatus 50 according to the second embodiment of the present invention.

As shown in FIG. 6, the pressure swing adsorption gas separation apparatus (hereinafter also simply referred to as "PSA apparatus") 50 of the present embodiment includes a raw material gas-storage tank 1 that stores a raw material gas containing two or more components, a strong adsorbate component-storage tank 2 that stores components which are readily adsorbed (strong adsorbate component), a weak adsorbate component-storage tank 3 that stores components which are hardly adsorbed (weak adsorbate component), a compressor 4, a compressor 5, lower columns 10B, 11B, upper columns 10U and 11U, lines L201 to L217, and on-off valves V1 to V215. The PSA apparatus 50 of the present embodiment is an apparatus that separates two or more components from the raw material gas using a pressure swing adsorption gas separation method and recovers each of the components as a highly concentrated gas component.

The raw material gas-storage tank 1, the strong adsorbate component-storage tank 2, and the weak adsorbate component-storage tank 3 can store gas components (the raw material gas, strong adsorbate component, and weak adsorbate component). The shape and size (capacity) of these tanks are not particularly limited, and can be appropriately selected depending on the supply amount, recovery amount, and the like. Further, the material of these tanks is not particularly limited as long as it is not corroded by the stored gas.

The raw material gas is a mixed gas containing two or more components. The mixed gas is not particularly limited as long as it contains two or more gas components. Examples of such a mixed gas include a mixed gas containing two gas components, nitrogen gas and xenon.

The lower columns 10B and 11B and the upper columns 10U and 11U are adsorption columns in which the inner space of a cylindrical container is filled with an adsorbent. The shape and size (capacity) of these adsorption columns are not particularly limited, and can be appropriately selected depending on the supply amount, recovery amount, and the like. Further, the material of these adsorption columns is not particularly limited as long as it is not corroded by the stored gas.

The lower columns 10B and 11B and the upper columns 10U and 11U are each filled with an adsorbent. The adsorbent is not particularly limited as long as it has adsorption properties that readily or hardly adsorb the target component in the raw material gas, and has adsorption properties that hardly or readily adsorb components other than the target component.

For example, when the raw material gas is a mixed gas containing two gas components, nitrogen gas and xenon, an activated carbon can be used as the adsorbent. The activated carbon has the property that, as an equilibrium adsorption amount, a large amount of xenon is adsorbed (readily adsorbing property) and a small amount of nitrogen is adsorbed (hardly adsorbing property).

The lines L201 to L217 are gas flow paths that introduce gas into or lead out gas from each of the above-described structures.

The line L201 is a flow path that introduces the raw material gas into the raw material gas-storage tank 1.

A first end of the line L202 is connected to the raw material gas-storage tank 1, and a second end is connected to the line L203 and line L215 at a branching point T. That is, the line L202 is a part of the gas flow path that leads out the gas from the raw material gas-storage tank 1 into the compressor 4.

A first end of the line L203 is connected to the strong adsorbate component-storage tank 2, and a second end is connected to the line L202 and line L215 at the branching point T. That is, the line L203 is a part of the gas flow path that leads out the gas from the strong adsorbate component-storage tank 2 into the compressor 4.

The line L204 branches from the line L215 and is connected to the lower column 10B. That is, the line L204 is a part of a gas flow path (first flow path) that introduces the compressed gas led out from the compressor 4 into the lower column 10B. Furthermore, branching points P and R are located in the primary side of the lower column 10B on the line L204.

The line L205 branches from the line L215 and is connected to the lower column 11B. That is, the line L205 is a part of a gas flow path (first flow path) that introduces the compressed gas led out from the compressor 4 into the lower column 11B. Furthermore, branching points Q and S are located on the primary side of the lower column 11B on the line L205.

The line L206 is a gas flow path that is connected to each of the line L204 and the line L205, and introduces the weak adsorbate component led out from the upper columns 10U and 11U into the weak adsorbate component-storage tank 3.

The line L207 is a gas flow path that discharges the weak adsorbate component led out from the weak adsorbate component-storage tank 3 to the outside of the apparatus.

The line L208 is a part of the gas flow path that introduces the weak adsorbate component led out from the storage tank 3 into each of the upper columns 10U and 11U.

The line L209 is connected to the lower column 10B through the line L204 and to the raw material gas-storage tank 1 through the line L217. Specifically, the line L209 branches from the line L204 at a branching point (second branching point) R located on the line L204 (first flow path), and joins with the line L210 and the line L217. That is, the line L209 is located between the line L204 and the line L217, and is part of a flow path (third flow path) that returns the gas from the lower column 10B into the raw material gas-storage tank 1.

The line L210 is connected to the lower column 11B through the line L205, and to the raw material gas-storage tank 1 through the line L217. Specifically, the line L210 branches from the line L205 at a branching point (second branching point) S located on the line L205 (first flow path), and joins with the line L209 and the line L217. That is, the line L210 is located between the line L205 and the line L217 and is part of a flow path (third flow path) that returns gas from the lower column 11B into raw material gas-storage tank 1.

The line L211 is connected to the lower column 10B through the line L204, and connected to the strong adsorbate component-storage tank 2 through the line L216. Specifically, the line L211 branches from the line L204 at a branching point (first branching point) P located on the line L204 (first flow path), and joins with the line L212 and the line L216. That is, the line L211 is located between the line L204 and the line L216, and is part of a flow path (second flow path) that returns the gas from lower column 10B into the strong adsorbate component-storage tank 2.

The line L212 is connected to the lower column 11B through the line L205, and connected to the strong adsorbate component-storage tank 2 through the line L216. Specifically, the line L212 branches from the line L205 at a branching point (first branching point) Q located on the line L205 (first flow path), and joins with the line L211 and the line L216. That is, the line L212 is located between the line L205 and the line L216, and is part of a flow path (second flow path) that returns the gas from the lower column 11B into the strong adsorbate component-storage tank 2.

The line L213 is a flow path that is connected to the strong adsorbate component-storage tank 2 and supplies the strong adsorbate component from the strong adsorbate component-storage tank 2 to outside the apparatus.

The line L214 is an equalizing pressure flow path that is located between the upper column 10U and the upper column 11U and equalizes pressure between the upper column 10U and the upper column 11U.

The line L215 branches into the line L204 and the line L205 at a first end, and connects to the lower columns 10B and 11B through the line L204 and the line L205, and a second end connects to the line L202 and the line L203 at a branching point T. That is, the line L215 is located between the compressor 4 and the lower columns 10B and 11B (adsorption columns), and is a gas flow path (first flow path) that introduces the compressed gas led out from the compressor 4 into the lower columns 10B and 11B.

The line 216 branches into the line L211 and the line L212 at a first end, and a second end connects to the strong adsorbate component-storage tank 2. That is, the line L216 is located between the branching points (first branching points) P and Q and the strong adsorbate component-storage tank 2, and is a part of the flow path (second flow path) that returns the gas from the lower columns 10B and 11B into the weak adsorbate component-storage tank 2.

The line L217 branches into the line L209 and the line L210 at a first end, and a second end connects to the raw material gas-storage tank 1. That is, the line L217 is located between the lower columns 10B and 11B and the raw material gas-storage tank 1, and is part of the flow path (third flow path) that returns the gas from the lower columns 10B and 11B into the raw material gas-storage tank 1.

The compressor 4 is located on the line L215, compresses (compresses) either the raw material gas which is introduced from the raw material gas-storage tank 1 into the line L215 through the line L202 or the strong adsorbate component which is introduced from the strong adsorbate component-storage tank 2 into the line L215 through the line L203, and then supplies it into the lower column 10B or the lower column 11B through the line L204 or the line L205.

The compressor 4 is not particularly limited as long as it can compress (pressurize) the gas component. An example of such a compressor 4 is a diaphragm compressor.

Further, the discharge amount of the compressor 4 is not particularly limited, and can be appropriately selected depending on the supply amount, recovery amount, and the like of the gas component.

The compressor 5 is located on the line L213, compresses (compresses) the strong adsorbate component that is introduced from the strong adsorbate component-storage tank 2 into the line L213, and supplies the strong adsorbate component outside the apparatus 50. The compressor 5 is not particularly limited as long as it can compress (compress) the gas component. An example of such a compressor 5 is a diaphragm compressor. Further, the discharge amount of the compressor 5 is not particularly limited, and can be appropriately selected depending on the supply amount, recovery amount, and the like of the gas component.

Each of the on-off valves V201 to V215 is located on each of the lines L202 to L214, and opens or closes the flow paths of the gas components.

In the PSA apparatus 50 of the present embodiment, among these on-off valves, the on-off valve (first on-off device) V212 located on the line L211 is located near the branching point (first branching point) P.

In the present description, "the on-off valve V212 is located near the branching point P" means that the distance between the on-off valve V212 and the branching point P is short. Thereby, the volume of the line between the on-off valve V212 and the branching point P can be reduced. That is, when the gas led out from the lower column 10B is introduced into the strong adsorbate component-storage tank 2, the amount of gas remaining in the line L211 between the on-off valve V212 and the branching point P can be reduced.

Note that the amount of the gas remaining (residual gas amount) in the line L211 from the on-off valve V212 to the branching point P is the total of the volume of the pipe that is the line L211 from the on-off valve V212 to the branching point P, and the volume of the inside of the valve V212.

In the PSA apparatus 50 of the present embodiment, it is preferable that the amount of the residual gas from the inside of the on-off valve V212 to the branching point P be 0.1% by volume or less with respect to the gas volume sucked by the compressor 4 per minute.

Similarly, in the PSA apparatus 50 of the present embodiment, among these on-off valves, the on-off valve (first on-off device) V213 on the line L212 is located near the branching point (first branching point) Q.

In the present description, "the on-off valve V213 is located near the branching point Q" means that the distance between the on-off valve V213 and the branching point Q is short. Thereby, the volume of the line between the on-off valve V213 and the branching point Q can be reduced. That is, when the gas led out from the lower column 11B is introduced into the strong adsorbate component-storage tank 2, the amount of gas remaining in the line L212 between the on-off valve V213 and the branching point Q can be reduced.

Note that the amount of the gas remaining (residual gas amount) in the line L212 from the on-off valve V213 to the branching point Q is the total of the volume of the pipe that is the line L212 from the on-off valve V213 to the branching point Q, and the volume of the inside of the valve V213.

In the PSA apparatus 50 of the present embodiment, it is preferable that the amount of the residual gas from the inside of the on-off valve V213 to the branching point Q be 0.1*%* by volume or less with respect to the gas volume sucked by the compressor 4 per minute.

Similarly, in the PSA apparatus 50 of the present embodiment, among these on-off valves, the on-off valve (second on-off device) V210 on the line L209 is located near the branching point (second branching point) R.

In the present description, "the on-off valve V210 is located near the branching point R" means that the distance between the on-off valve V210 and the branching point R is short. Thereby, the volume of the line between the on-off valve V210 and the branching point R can be reduced. That is, when the gas led out from the lower column 10B is introduced into the raw material gas-storage tank 1, the amount of gas remaining in the line L209 between the on-off valve V210 and the branching point R can be reduced.

Note that the amount of the gas remaining (residual gas amount) of the line L209 from on-off valve V210 to the branching point R is the total of the volume of the pipe that is the line L209 from the on-off valve V210 to the branching point R, and the volume of the inside of the valve V210.

In the PSA apparatus 50 of the present embodiment, it is preferable that the amount of the residual gas from the inside of the on-off valve V210 to the branching point R be 0.1% by volume or less with respect to the gas volume sucked by the compressor 4 per minute.

Similarly, in the PSA apparatus 50 of the present embodiment, among these on-off valves, the on-off valve (second on-off device) V211 on the line L210 is located near the branching point (second branching point) S.

In the present description, "the on-off valve V211 is located near the branching point S" means that the distance between the on-off valve V211 and the branching point S is short. Thereby, the volume of the line between the on-off valve V211 and the branching point S can be reduced. That is, when the gas led out from the lower column 11B is introduced into the raw material gas-storage tank 1, the amount of gas remaining in the line L210 between the on-off valve V211 and the branching point S can be reduced.

Note that the amount of the gas remaining (residual gas amount) in the line L210 from the on-off valve V211 to the branching point S is the total of the volume of the pipe that is the line L210 from the on-off valve V211 to the branching point S and the volume of the inside of the valve V211.

In the PSA apparatus 50 of the present embodiment, it is preferable that the amount of the residual gas from the inside of the on-off valve V211 to the branching point S be 0.1% by volume or less with respect to the gas volume sucked by the compressor 4 per minute.

The on-off valves V210 to V213 are not particularly limited as long as they can reduce the amount of gas remaining in the pipe that is the flow path of the gas component. Examples of such on-off valves include ball on-off valves, rotary on-off valves, bellows on-off valves, diaphragm on-off valves, and the like.

These on-off valves are preferable because the volume inside the on-off valve can be reduced.

Furthermore, among ball on-off valves, a three-way flow path switching type ball on-off valve is more preferable because the pipe volume can be extremely small.

Furthermore, among bellows on-off valves and diaphragm on-off valves, block types such as the three-way branch type, and the two-way three-way valve, which consists of multiple on-off valves in one block, can have an extremely small pipe volume, the driving durability of the on-off valve is also excellent, and therefore they are very preferable.

Further, in the PSA apparatus 50 of the present embodiment, it is preferable that each of the above-mentioned branching point (first branching point) P and branching point (second branching point) R be located near the lower column 10B of the line L204.

Similarly, in the PSA apparatus 50 of the present embodiment, it is preferable that each of the above-mentioned branching point (first branching point) Q and branching point (second branching point) S be located near the lower column 11B of the line L205.

In the present description, "the branching points P and R are located near the lower column 10B" means that the distance between the branching points P and R and the lower column 10B is short. Thereby, the volume of the line L204 between the branching points P and R and the lower column 10B can be reduced. That is, when the gas led out from the lower column 10B is introduced into the raw material gas-storage tank 1 or the strong adsorbate component-storage tank 2, the amount of the gas remaining in the line L204 between each of the branching points P and R and the lower column 10B can be reduced.

In the PSA apparatus 50 of the present embodiment, it is preferable that the amount of the residual gas between each of the branching points P and R and the lower column 10B be 1 % by volume or less with respect to the gas volume sucked by the compressor 4 per minute.

Similarly, in the present description, "the branching point Q and S is located near the lower column 11B" means that the distance between the branching point Q and S and the lower column 11B is short. Thereby, the volume of the line L205 between the branching point Q and S and the lower column 11B can be reduced. That is, when the gas led out from the lower column 11B is introduced into the raw material gas-storage tank 1 or the strong adsorbate component-storage tank 2, the amount of the gas remaining in the line L205 between each of the branching points Q and S and the lower column 11B can be reduced.

In the PSA apparatus 50 of the present embodiment, it is preferable that the amount of the residual gas between each of the branching points Q and S and the lower column 11B be 1 % by volume or less with respect to the gas volume sucked by the compressor 4 per minute.

Further, in the PSA apparatus 50 of the present embodiment, a densitometer may be installed in each of the above-mentioned flow paths.

The specific position of the densitometer is on the line L204 between the on-off valve V203 and the branching point R, the line L211 between the on-off valve V212 and the branching point P, the line L209 between the on-off valve 210 and the branching point R, the line L205 between the on-off valve V204 and the branching point S, the line L212 between the on-off valve V213 and the branching point Q, and the line L210 between the on-off valve 211 and the branching point S.

In addition, it is preferable that each densitometer be installed near the branching point R on the line L204, near the branching point P on the line L211, near the branching point R on the line L209, near the branching point S on the line L205, near the branching point Q on the line L212, and near the branching point S on the line L210.

Next, a method of operating the pressure swing adsorption gas separation apparatus 50 of the present embodiment will be explained.

In the following explanation, a case in which a mixed gas containing two gas components, nitrogen gas and xenon, is used as the raw material gas, and an equilibrium separation type adsorbent, activated carbon, is used as the adsorbent filled in the lower columns 10B and 11B and the upper columns 10U and 11U will be explained as an embodiment.

In the operating method of the PSA apparatus 50 of the present embodiment, first, (1) adsorption step, (2) rinsing step, (3) lower column-depressurizing step, (4) upper column-depressurizing step, (5) purge regeneration step, and (6) equalizing pressure-pressurizing step are carried out in the lower column 10B and the upper column 10U.

### (1) Adsorption step

First, in the adsorption step, the on-off valves V202, V204, V207, V209, V210, and V212 are closed, and the on-off valves V201, V203, V205, and V214 are opened, and the mixed gas led out from the raw material gas-storage tank 1 is compressed by the compressor 4, and introduced into the lower part of the lower column 10B through the lines L215 and L204.

The lower column 10B and the upper column 10U are connected because the on-off valve V205 is opened, and the pressure increases in almost the same way.

Note that the mixed gas led out from the raw material gas-storage tank 1 is a mixed gas of the raw material gas that is introduced into the raw material gas-storage tank 1 from the line L201, and gas led out from the lower column 10B or 11B during the upper column-depressurizing step or the purge regeneration step, which will be described below.

Next, as the mixed gas introduced into the lower part of the lower column 10B reaches the upper part of the lower column 10B, xenon is preferentially adsorbed to the adsorbent, and nitrogen is concentrated in the gas phase. The concentrated nitrogen is introduced from the upper part of the lower column 10B into the lower part of the upper column 10U, and a trace amount of xenon contained in the concentrated nitrogen is further adsorbed in the upper column 10U. After the pressure in the upper column 10U becomes higher than the pressure in the weak adsorbate component-storage tank 3, the nitrogen further concentrated in the upper column 10U is led out into the weak adsorbate component-storage tank 3 through the line L206.

Note that the nitrogen stored in the weak adsorbate component-storage tank 3 is discharged from the line L207 to the outside of the apparatus at a flow rate corresponding to the nitrogen contained in the raw material gas, and the remaining nitrogen is recycled as a countercurrent purge gas in the purge regeneration step described later.

### (2) Rinsing step

Next, in the rinsing step, the on-off valve V201 is closed, the on-off valve V202 is opened, and xenon led out from the strong adsorbate component-storage tank 2 is introduced into the lower part of the lower column 10B. By introducing xenon, which is a strong adsorbate component, into the lower column 10B, the nitrogen co-adsorbed to the adsorbent in a packed bed of the lower column 10B and the nitrogen existing in the voids between the adsorbents are formed out from the lower column 10B into the upper column 10U, and the lower column 10B is saturated with xenon. Next, by closing the on-off valves V207, V208, V214, and V215 and opening the on-off valve V209, the nitrogen led out from the top of the upper column 10U is sent into the upper column 11U through the line L214.

### (3) Lower column-depressurizing step

Next, in the lower column-depressurizing step, the on-off valves V203, V205, and V210 are closed, and the on-off valve V212 is opened. As a result, the xenon adsorbed to the lower column 10B during the adsorption step and the rinsing step described above is transferred to the strong adsorbate component-storage tank 2 through the line L211 and the line L216 due to the differential pressure between the lower column 10B and the strong adsorbate component-storage tank 2. The xenon recovered in the strong adsorbate component-storage tank 2 is compressed by the compressor 5 and then led out as a product from the line L213, and the remaining xenon is used as a co-current purge gas in the rinsing step described above.

Note that during the lower column-depressurizing step, the on-off valves V205, V207, V209, and V214 are closed, and the upper column 10U is in a resting state.

According to the PSA apparatus 50 of the present embodiment, the on-off valve (first on-off device) V212 which is located in the flow path (second flow path) L211 between the lower column 10B and the strong adsorbate component-storage tank 2 is located near the branching point P, and the volume of the line L211 from the inside of the on-off valve V212 to the branching point P is reduced. As a result, the amount of the mixed gas remaining in the line L211 from the inside of the on-off valve V212 to the branching point P in the adsorption step is reduced. Accordingly, in the lower column-depressurizing step, when the high purity xenon led out from the lower column 10B is passed through the line L204 and the line L211, the amount of contaminating impurities is reduced. As a result, in the lower column-depressurizing step, xenon, which is the strong adsorbate component, can be recovered with high purity in the strong adsorbate component-storage tank 2.

### (4) Upper column-depressurizing step

Next, in the upper column-depressurizing step, the on-off valves V203, V207, V209, V211, V212, and V214 are closed, and the on-off valves V205 and V210 are opened. Thereby, the gas in the upper column 10U is introduced into the lower column 10B due to the pressure difference between the upper column 10U, which has been in a resting state during the lower column-depressurizing step, and the lower column 10B, which has been decompressed. After purging the inside of the lower column 10B, the gas introduced into the lower column 10B is led out from the lower column 10B and recovered in the raw material gas-storage tank 1 through the line L209 and the line L217. The gas recovered in the raw material gas-storage tank 1 is mixed with the raw material gas introduced from the line L201, and then used as the mixed gas in the adsorption step described above.

### (5) Purge regeneration step

Next, in the purge regeneration step, the on-off valves V203, V209, V212, and V214 are closed, and the on-off valves V205, V207, and V210 are opened. Thereby, the nitrogen stored in the weak adsorbate component-storage tank 3 is introduced from the upper part of the upper column 10U through the line L208 as a countercurrent purge gas. The nitrogen introduced into the upper column 10U displaces and desorbs the xenon adsorbed to the adsorbent as it moves downward in the upper column 10U. The gas containing a relatively large amount of xenon desorbed from the adsorbent is led out from the upper column 10U and then recovered in the raw material gas-storage tank 1 through the lower column 10B, the line L209 and the line L217. The gas recovered in the raw material gas-storage tank 1 is mixed with the raw material gas introduced from the line L201, similar to the upper column-depressurizing step described above, and then used as the mixed gas in the adsorption step described above.

Note that, instead of the nitrogen stored in the weak adsorbate component-storage tank 3, the nitrogen led out from the upper column 10U in the above-mentioned adsorption step may be used as a countercurrent purge gas and introduced directly into the upper column 10U during the purge regeneration step.

In the PSA apparatus 50 of the present embodiment, the on-off valve (second on-off device) V210 which is located in the flow path (third flow path) L209 between the lower column 10B and the raw material gas-storage tank 1 is located near the branching point R, and the volume of the line L209 from the inside of the on-off valve V210 to the branching point R is reduced. As a result, the amount of xenon remaining in the line L209 from the inside of the on-off valve V210 to the branching point R is reduced in the upper column-depressurizing step and the purge regeneration step. Accordingly, the xenon concentration in the mixed gas is reduced in the adsorption step. The mixed gas stored in the raw material gas-storage tank 1 can be introduced into the lower column 10 without fluctuation of the xenon concentration in the mixed gas.

### (6) Equalizing pressure-pressurizing step

Next, in the equalizing pressure-pressurizing step, the on-off valves V203, V207, V208, V210, V212, V214, and V215 are closed, and the on-off valve V209 is opened. When the equalizing pressure-pressurizing step is carried out in the lower column 10B and the upper column 10U, the above-mentioned rinsing step is carried out in the lower column 11B and the upper column 11U. In the equalizing pressure-pressurizing step, the nitrogen led out from the upper column 11U during the rinsing step is introduced into the upper column 10U and lower column 10B through the line L214.

Note that when returning from the "equalizing pressure-pressurizing step" to the "adsorption step", the on-off valve V201 is opened and the on-off valve V202 is closed. Next, the mixed gas led out from the raw material gas-storage tank 1 is compressed by the compressor 4 and then introduced into the lower part of the lower column 10B through the lines L215 and L204.

In the PSA apparatus 50 of the present embodiment, the six steps described above are carried out sequentially in the lower column 11B and upper column 11U as well as in the lower column 10B and upper column 10U.

While the "adsorption step" - "rinsing step" are carried out in one adsorption column (lower column 10B and upper column 10U), the "lower column-depressurizing step" - "purge regeneration step" - "equalizing pressure-pressurizing step" are carried out in the other adsorption column (lower column 11B and upper column 11U).

Also, while the "lower column-depressurizing step" - "purge regeneration step" - "equalizing pressure-pressurizing step" are carried out in one adsorption column, the "adsorption step" - "rinsing step" are carried out in the other adsorption column.

According to the PSA apparatus 50 of the present embodiment, nitrogen and xenon are continuously concentrated by sequentially repeating the six steps described above between the lower and upper columns 10B and 10U, and the lower and upper columns 11B and 11U.

Note that in the PSA apparatus 50 of the present embodiment, the introduction of the raw material gas from the line L201 into the raw material gas-storage tank 1, the discharge of the nitrogen from the weak adsorbate component-storage tank 3 through the line L207, and leading out of the xenon from the strong adsorbate component-storage tank 2 through the line L213 are carried out continuously regardless of the steps described above.

According to the PSA apparatus 50 of the present embodiment, high purity xenon can be separated and recovered from the raw material gas.

Note that the purity of the xenon separated and recovered by the PSA apparatus 50 of the present embodiment is not particularly limited, but is preferably 99 volume % or more, more preferably 99.9 volume % or more, and even more preferably 99.95% by volume or more.

The PSA apparatus 50 of the present embodiment can be used as a part of the manufacturing equipment for semiconductor products of display apparatuses. According to the PSA apparatus 50 of the present embodiment, the exhaust gas discharged from the manufacturing equipment is used as the raw material gas, and after separating and recovering xenon contained in the raw material gas, high-purity xenon can be supplied to the manufacturing equipment.

Furthermore, when the PSA apparatus 50 of the present embodiment is used as a part of the above-mentioned manufacturing equipment, situations may frequently occur in which there is no need to supply xenon or in which the raw material gas (that is, exhaust gas from the manufacturing equipment) does not flow in. In such a situation, in the PSA apparatus 50 of the present embodiment, it is possible to always maintain a state in which the product gas (xenon) can be supplied while stopping the supply by returning the nitrogen discharged from the weak adsorbate component-storage tank 3 through the line L207 or the xenon led out from the strong adsorbate component-storage tank 2 through the line L213 into the raw material gas-storage tank 1.

As explained above, in the PSA apparatus 50 of the present embodiment, the on-off valve (first on-off device) V212 located on the line L211 that is the flow path (second flow path) between the lower column 10B and the strong adsorbate component-storage tank 2 is located near the branching point P. Thereby, the volume of the line L211 from the inside of the on-off valve V212 to the branching point P can be reduced, so the amount of the gas remaining in the line can be reduced. Therefore, according to the PSA apparatus 50 of the present embodiment, when the strong adsorbate component (gas) is led out from the lower column 10B into the strong adsorbate component-storage tank 2, the amount of impurities (components other than xenon in the raw material gas) contaminating xenon is reduced, and high purity xenon (strong adsorbate component) can be separated and collected as a product.

Furthermore, in the PSA apparatus 50 of this embodiment, the branching point P located on the line L204 is located near the lower column 10B. Thereby, the volume of the line L204 from the branching point P to the lower column 10B can be reduced. Therefore, according to the PSA apparatus 50 of the present embodiment, when the strong adsorbate component (gas) is introduced from the lower column 10B into the strong adsorbate component-storage tank 2, the amount of the gas remaining in a blocked space in the lower column 10B, the line L204, the line L211, and the on-off valve V212 can be further reduced.

In the PSA apparatus 50 of the present embodiment, the on-off valve (second on-off device) V210 which is located on the line L209 that is the flow path (third flow path) between the lower column 10B and the raw material gas-storage tank 1 is located near the branching point R. Furthermore, the branching point R located on the line L204 is located near the lower column 10B. Thereby, when the mixed gas is introduced from the lower column 10B into the raw material gas-storage tank 1, the amount of the gas remaining in a blocked space in the lower column 10B, the line L204, the line L209, and the on-off valve V210 can be further reduced.

In addition, in the PSA apparatus 50 of the present embodiment, the branching point P (branching point Q) which is located on the line L204 (L205) is closer to the lower column 10B (11B) than the branching point R (branching point S) which is located on the line L217 which is the line for returning the gas into the raw material gas-storage tank 1. Therefore, there is an advantage in that the strong adsorbate gas components do not pass through the branching point R (branching point S). However, the configuration described above is an example, and the present invention is not limited thereto. That is, in the PSA apparatus 50 of the present embodiment, the positional relationship between the branching point P (branching point Q) and the branching point R (branching point S) on the line L204 (L205) may be reversed. Furthermore, the branching point P (branching point Q) and the branching point R (branching point S) may be at the same position by using a cross joint.

### <Third embodiment>

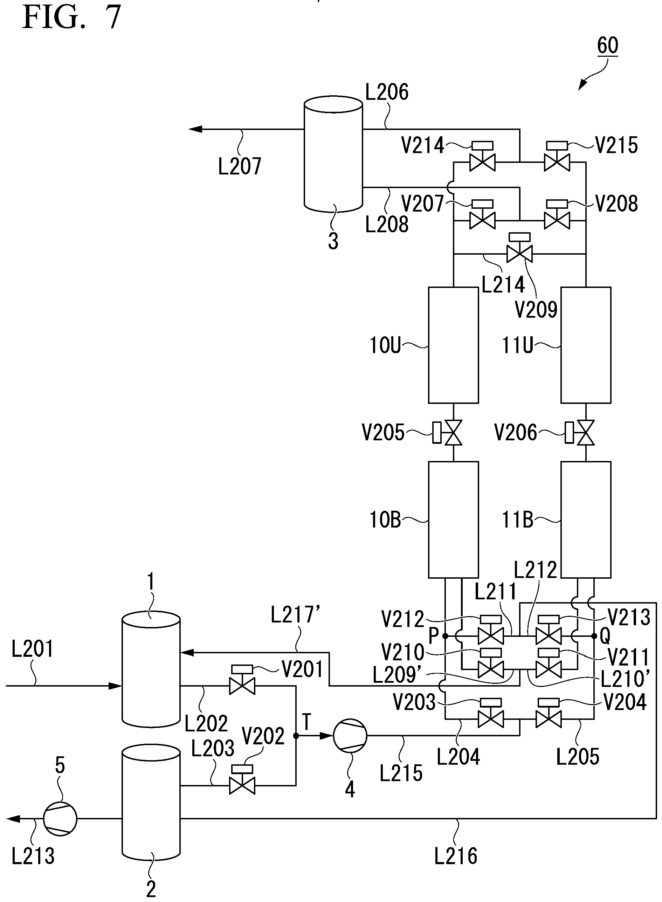

Next, a third embodiment of the present invention, PSA apparatus, will be described in detail with reference to FIG. 7.

The PSA apparatus 50 of the second embodiment includes the line L209 branching at the branching point R located on the line L204, whereas as shown in FIG. 7, the PSA apparatus 60 of the present embodiment includes a line L209' that is directly connected to the lower column 10B. Both are different in this structure, but the other structures are the same. Therefore, in the PSA apparatus 60 of the present embodiment, the same components as those of the PSA apparatus 50 of the second embodiment are given the same reference numerals and the description thereof will be omitted.

A first end of the line L209' is connected to the lower column 10B, and a second end is connected to a line L210' and a line L217'. That is, the line L209' is located between the lower column 10B and the line L217' and is part of a flow path (third flow path) that returns the gas from the lower column 10B into the raw material gas-storage tank 1.

A first end of the line L210' is connected to the lower column 11B, and a second end is connected to the line L209' and the line L217'. That is, the line L210' is located between the lower column 11B and the line L217' and is part of a flow path (third flow path) that returns the gas from the lower column 11B into the raw material gas-storage tank 1.

The first end of the line L217' branches into the line L209' and the line L210', and the second end connects to the raw material gas-storage tank 1. That is, the line L217' is located between the lower columns 10B and 11B and the raw material gas-storage tank 1, and is a part of the flow path (third flow path) that returns the gas from the lower columns 10B and 11B into the raw material gas-storage tank 1.

In the PSA apparatus 60 of the present embodiment, among these on-off valves, the on-off valve (second on-off device) V210 located on the line L209' is preferably located near the lower column 10B.

In the present description, "the on-off valve V210 is located near the lower column 10B" means that the distance between the on-off valve V210 and the lower column 10B is short. Thereby, the volume of the line L209' between the on-off valve V210 and the lower column 10B can be reduced. That is, when the gas is introduced from the lower column 10B into the raw material gas-storage tank 1, the amount of gas remaining in the line L209' between the on-off valve V210 and the lower column 10B can be reduced.

Note that the amount of the gas remaining (residual gas amount) in the line L209' from the on-off valve V210 to the lower column 10B is the total of the volume of the pipe that is the line L209' from the on-off valve V210 to the lower column 10B, and the volume of the inside of the valve V210.

In the PSA apparatus 60 of the present embodiment, it is preferable that the volume of the line L209' from the inside of the on-off valve V210 to the lower column 10B be 0.1*%* by volume or less with respect to the gas volume sucked by the compressor 4 per minute.

Similarly, in the PSA apparatus 60 of the present embodiment, it is preferable that among these on-off valves, the on-off valve (second on-off device) V211 on the line L210' be located near the lower column 11B.

In the present description, "the on-off valve V211 is located near the lower column 11B" means that the distance between the on-off valve V211 and the lower column 11B is short. Thereby, the volume of the line L210' between the on-off valve V211 and the lower column 11B can be reduced. That is, when the gas is introduced from the lower column 11B into the raw material gas-storage tank 1, the amount of gas remaining in the line L210' between the on-off valve V211 and the lower column 11B can be reduced.

Note that the amount of the gas remaining (residual gas amount) in the line L210' from the on-off valve V211 to the lower column 11B is the total of the volume of the pipe that is the line L210' from the on-off valve V211 to the lower column 11B, and the volume of the inside of the valve V211.

In the PSA apparatus 60 of the present embodiment, it is preferable that the volume of the line L210' from the inside of the on-off valve V211 to the lower column 11B be 0.1*%* by volume or less with respect to the gas volume sucked by the compressor 4 per minute.

As explained above, according to the present embodiment PSA apparatus 60, the same effects as those of the PSA apparatus 100 according to the first embodiment described above can be obtained.

Furthermore, the present embodiment PSA apparatus 60 includes the line L209' directly connected to the lower column 10B and the on-off valve V210 which is installed near the lower column 10B, so that the amount of gas remaining in the line can be further reduced.

### <Fourth embodiment>

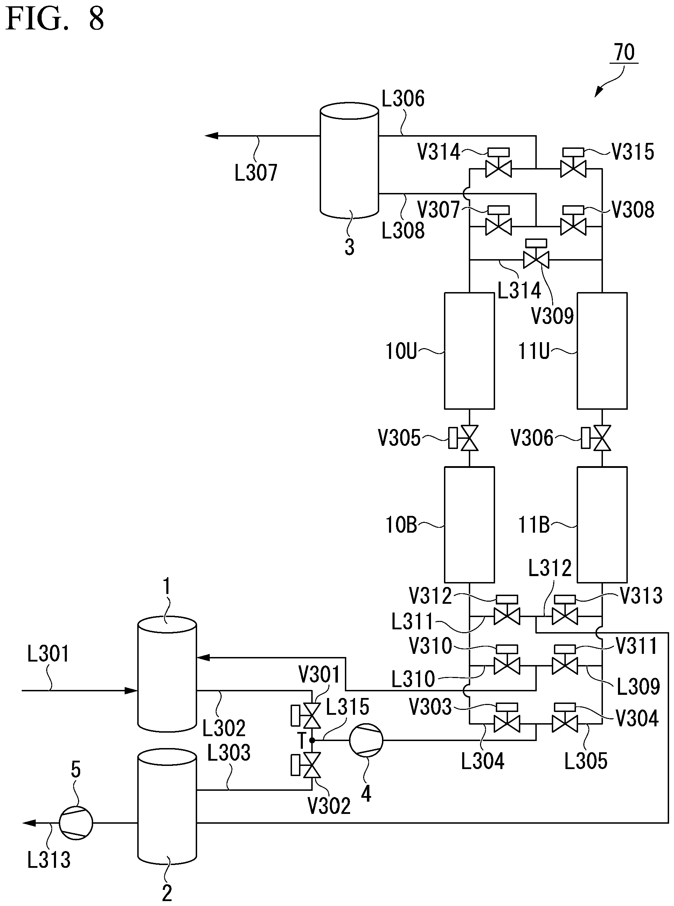

Next, a pressure swing adsorption gas separation apparatus according to a fourth embodiment will be described with reference to the drawings. FIG. 8 is a schematic diagram showing a pressure swing adsorption gas separation apparatus 70 according to the fourth embodiment.

As shown in FIG. 8, the pressure swing adsorption gas separation apparatus (hereinafter also simply referred to as "PSA apparatus") 70 of the present embodiment includes a raw material gas-storage tank 1 that stores a raw material gas containing two or more components; a strong adsorbate component-storage tank 2 that stores components which are readily adsorbed (strong adsorbate component), a weak adsorbate component-storage tank 3 that stores components which are hardly adsorbed (weak adsorbate component), a compressor 4, a compressor 5, four adsorption columns of lower columns 10B, 11B, and upper columns 10U and 11U, lines L301 to L315, and on-off valves V301 to V315. The PSA apparatus 70 of the present embodiment is an apparatus that separates two or more components from the raw material gas using a pressure swing adsorption gas separation method and recovers each of the components as a highly concentrated gas component.

The raw material gas-storage tank 1, the strong adsorbate component-storage tank 2, and the weak adsorbate component-storage tank 3 can store gas components (raw material gas, strong adsorbate component, and weak adsorbate component). The shape and size (capacity) of these tanks are not particularly limited, and can be appropriately selected depending on the supply amount, recovery amount, and the like. Further, the material of these tanks is not particularly limited as long as it is not corroded by the stored gas.

The raw material gas is a mixed gas containing two or more components. The mixed gas is not particularly limited as long as it contains two or more gas components. Examples of such a mixed gas include a mixed gas containing two gas components, nitrogen gas and xenon.

The lower columns 10B and 11B and the upper columns 10U and 11U are adsorption columns in which the inner space of a cylindrical container is filled with an adsorbent. The shape and size (capacity) of these adsorption columns are not particularly limited, and can be appropriately selected depending on the supply amount, recovery amount, and the like. Further, the material of these adsorption columns is not particularly limited as long as it is not corroded by the stored gas.

The lower columns 10B and 11B and the upper columns 10U and 11U are each filled with an adsorbent. The adsorbent is not particularly limited as long as it has adsorption properties that readily or hardly adsorb the target component in the raw material gas, and has adsorption properties that hardly or readily adsorb components other than the target component.

For example, when the raw material gas is a mixed gas containing two gas components, nitrogen gas and xenon, an activated carbon can be used as the adsorbent. The activated carbon has the property that, as an equilibrium adsorption amount, a large amount of xenon is adsorbed (readily adsorbing property) and a small amount of nitrogen is adsorbed (hardly adsorbing property).

The lines L301 to L315 are gas flow paths that introduce gas into or lead out gas from each of the above-described structures.

The line L301 is a flow path that introduces the raw material gas into the raw material gas-storage tank 1.

A first end of the line L302 (second flow path) is connected to the raw material gas-storage tank 1, and a second end is connected to the line L303 and line L315 at a branching point T. That is, the line L302 is a part of the gas flow path that leads out the gas from the raw material gas-storage tank 1 into the compressor 4.

A first end of the line L303 is connected to the strong adsorbate component-storage tank 2, and a second end is connected to the line L302 and line L315 at the branching point T. That is, the line L303 is a part of the gas flow path that leads out the gas from the strong adsorbate component-storage tank 2 into the compressor 4.

The line L304 and the line L305 branches from the line L315, and is a part of a gas flow path that introduces the compressed gas led out from the compressor 4 into the lower columns 10B and 11B.

The line L306 is a gas flow path that is connected to each of the line L304 and the line L305, and introduces the weak adsorbate component led out from the upper columns 10U and 11U into the weak adsorbate component-storage tank 3.

The line L307 is a gas flow path that discharges the weak adsorbate component led out from the weak adsorbate component-storage tank 3 to the outside of the apparatus 70.

The line L308 is a part of the gas flow path that introduces the weak adsorbate component led out from the weak adsorbate component-storage tank 3 into each of the upper columns 10U and 11U.

The line L309 and the line 310 are flow paths that are connected to each of the lower columns 10B and 11B, and return the gas from the lower columns 10B and 11B into the raw material gas-storage tank 1.

The lines L311 and L312 are flow paths that are connected to each of the lower columns 10B and 11B, and return the gas from the lower columns 10B and 11B into the strong adsorbate component-storage tank 2.

The line L313 is a flow path that is connected to the strong adsorbate component-storage tank 2 and supplies the strong adsorbate component from the strong adsorbate component-storage tank 2 to outside the apparatus.

The line L314 is an equalizing pressure flow path that is located between the upper column 10U and the upper column 11U and equalizes pressure between the upper column 10U and the upper column 11U.

The line L315 branches into the line L304 and the line L305 at a first end, and connects to the lower columns 10B and 11B through the line L304 and the line L305, and a second end thereof branches into the line L302 and the line L203 at a branching point T.

In the present embodiment PSA apparatus 70, the lines L302, L303, and L315 constitute a flow path that branches in three directions at the branching point T.

The compressor 4 is located on the line L315, compresses (compresses) either the raw material gas which is introduced from the raw material gas-storage tank 1 into the line L315 through the line L302 or the strong adsorbate component which is introduced from the strong adsorbate component-storage tank 2 into the line L315 through the line L303, and then supplies it into the lower column 10B or the lower column 11B through the line L304 of the line L305.

The compressor 4 is preferably located near the branching point T on the line L315. In the present description, "the compressor 4 is located near the branching point T" means that the distance between the compressor 4 and the branching point T is short. Thereby, the volume of the line L315 on the primary side of the compressor 4 can be reduced. That is, the gas remaining in the line between the compressor 4 and the branching point T can be reduced.

The compressor 4 is not particularly limited as long as it can compress (pressurize) the gas component. An example of such a compressor 4 is a diaphragm compressor.

Further, the discharge amount of the compressor 4 is not particularly limited, and can be appropriately selected depending on the supply amount, recovery amount, and the like of the gas component.

The compressor 5 is located on the line L313, compresses (pressurize) the strong adsorbate component that is introduced from the strong adsorbate component-storage tank 2 into the line L313, and supplies the strong adsorbate component outside the apparatus 70. The compressor 5 is not particularly limited as long as it can compress (pressurize) the gas component. An example of such a compressor 5 is a diaphragm compressor. Further, the discharge amount of the compressor 5 is not particularly limited, and can be appropriately selected depending on the supply amount, recovery amount, and the like of the gas component.

Each of the on-off valves V301 to V315 is located on each of the lines L302 to L314, and opens or closes the flow paths of the gas components.

In the PSA apparatus 70 of the present embodiment, among these on-off valves, the on-off valve (first on-off device) V301 located on the line L302 is located near the branching point (first branching point) T.

In the present description, "the on-off valve V301 is located near the branching point T" means that the distance between the on-off valve V301 and the branching point T is short. Thereby, among the line L302, the line L303, and the line L315, the volume of the line L302 between the on-off valve V301 and the branching point T can be reduced. That is, when the raw material gas is introduced from the raw material gas-storage tank 1 into the compressor 4, the amount of gas remaining in the line L302 between the on-off valve V301 and the branching point T can be reduced.

Note that the amount of the gas remaining (residual gas amount) in the line L302 from the on-off valve V301 to the branching point T is the total of the volume of the pipe that is the line L302 from the on-off valve V301 to the branching point T, and the volume of the inside of the valve V301.

In the PSA apparatus 70 of the present embodiment, it is preferable that the volume of the line L302 from the inside of the on-off valve V301 to the branching point T be 1% by volume or less with respect to the gas volume sucked by the compressor 4 per minute.

In the PSA apparatus 70 of the present embodiment, the on-off valve (second on-off device) V302 located on the line L303 is located near the branching point (first branching point) T. In the present description, "the on-off valve V302 is located near the branching point T" means that the distance between the on-off valve V302 and the branching point T is short.

Note that the amount of the gas remaining (residual gas amount) in the line L303 from the on-off valve V302 to the branching point T is the total of the volume of the pipe that is the line L303 from the on-off valve V302 to the branching point T, and the volume of the inside of the valve V302.

In the PSA apparatus 70 of the present embodiment, it is preferable that the volume of the line L303 from the inside of the on-off valve V302 to the branching point T be 1% by volume or less with respect to the gas volume sucked by the compressor 4 per minute.

The on-off valves V301 to V302 are not particularly limited as long as they can reduce the amount of gas remaining in the pipe that is the flow path of the gas component. Examples of such on-off valves include ball on-off valves, rotary on-off valves, bellows on-off valves, diaphragm on-off valves, and the like.

These on-off valves are preferable because the volume inside the on-off valve can be reduced.

Furthermore, among ball on-off valves, a three-way flow path switching type ball on-off valve is more preferable because the pipe volume can be extremely small.

Furthermore, among bellows on-off valves and diaphragm on-off valves, block types such as the three-way branch type, and the two-way three-way valve, which consists of multiple on-off valves in one block, can have an extremely small pipe volume, the driving durability of the on-off valve is also excellent, and therefore they are very preferable.

Next, a method of operating the pressure swing adsorption gas separation apparatus 70 of the present embodiment will be explained.

In the following explanation, a case in which a mixed gas containing two gas components, nitrogen gas and xenon, is used as the raw material gas, and an equilibrium separation type adsorbent, activated carbon, is used as the adsorbent filled in the lower columns 10B and 11B and the upper columns 10U and 11U will be explained as an embodiment.

In the operating method of the PSA apparatus 70 of the present embodiment, first, (1) adsorption step, (2) rinsing step, (3) lower column-depressurizing step, (4) upper column-depressurizing step, (5) purge regeneration step, and (6) equalizing pressure-pressurizing step are carried out in the lower column 10B and the upper column 10U.

### (1) Adsorption step

First, in the adsorption step, the on-off valves V302, V304, V307, V309, V310, and V312 are closed, and the on-off valves V301, V303, V305, and V314 are opened, and the mixed gas led out from the raw material gas-storage tank 1 is compressed by the compressor 4, and introduced into the lower part of the lower column 10B through the lines L315 and L304.

The lower column 10B and the upper column 10U are connected because the on-off valve V305 is opened, and the pressure increases in almost the same way.

Note that the mixed gas led out from the raw material gas-storage tank 1 is a mixed gas of the raw material gas that is introduced into the raw material gas-storage tank 1 from the line L301, and gas led out from the lower column 10B or 11B during the upper column-depressurizing step or the purge regeneration step, which will be described below.

Next, as the mixed gas introduced into the lower part of the lower column 10B reaches the upper part of the lower column 10B, xenon is preferentially adsorbed to the adsorbent, and nitrogen is concentrated in the gas phase. The concentrated nitrogen is introduced from the upper part of the lower column 10B into the lower part of the upper column 10U, and a trace amount of xenon contained in the concentrated nitrogen is further adsorbed in the upper column 10U. After the pressure in the upper column 10U becomes higher than the pressure in the weak adsorbate component-storage tank 3, the nitrogen further concentrated in the upper column 10U is led out into the weak adsorbate component-storage tank 3 through the line L306.

Note that the nitrogen stored in the weak adsorbate component-storage tank 3 is discharged from the line L307 to the outside of the apparatus at a flow rate corresponding to the nitrogen contained in the raw material gas, and the remaining nitrogen is recycled as a countercurrent purge gas in the purge regeneration step described later.

### (2) Rinsing step

Next, in the rinsing step, the on-off valve V301 is closed, the on-off valve V302 is opened, and xenon led out from the strong adsorbate component-storage tank 2 is introduced into the lower part of the lower column 10B. By introducing xenon, which is a strong adsorbate component, into the lower column 10B, the nitrogen co-adsorbed to the adsorbent in a packed bed of the lower column 10B and the nitrogen existing in the voids between the adsorbents are formed out from the lower column 10B into the upper column 10U, and the lower column 10B is saturated with xenon. Next, by closing the on-off valves V307, V308, V314, and V315 and opening the on-off valve V309, the nitrogen led out from the top of the upper column 10U is sent into the upper column 11U through the line L314.

### (3) Lower column-depressurizing step

Next, in the lower column-depressurizing step, the on-off valves V303, V305, and V310 are closed, and the on-off valve V312 is opened. As a result, the xenon adsorbed to the lower column 10B during the adsorption step and the rinsing step described above is transferred to the strong adsorbate component-storage tank 2 through the line L311 due to the differential pressure between the lower column 10B and the strong adsorbate component-storage tank 2. The xenon recovered in the strong adsorbate component-storage tank 2 is compressed by the compressor 5 and then led out as a product from the line L313, and the remaining xenon is used as a co-current purge gas in the rinsing step described above.

Note that during the lower column-depressurizing step, the on-off valves V305, V307, V309, and V314 are closed, and the upper column 10U is in a resting state.

According to the PSA apparatus 70 of the present embodiment, the on-off valve (first on-off device) V301 which is located in the flow path (second flow path) L302 connected to the raw material gas-storage tank 1 is located near the branching point T, and the volume of the line L302 from the inside of the on-off valve V301 to the branching point T is reduced. As a result, the amount of the mixed gas remaining in the line L302 from the inside of the on-off valve V301 to the branching point T in the adsorption step is reduced. Accordingly, in the adsorption, the amount of the mixed gas remaining in the line L302 from the inside of the on-off valve L301 to the branching point T is reduced, the high purity xenon can be introduced into the lower column 10 in the rinsing step, and the inside of the lower column 10 can be filled with the high purity xenon. As a result, in the lower column-depressurizing step, xenon, which is a strong adsorbate component, can be recovered with high purity in the strong adsorbate component-storage tank 2.

### (4) Upper column-depressurizing step

Next, in the upper column-depressurizing step, the on-off valves V303, V307, V309, V311, V312, and V314 are closed, and the on-off valves V305 and V310 are opened. Thereby, the gas in the upper column 10U is introduced into the lower column 10B due to the pressure difference between the upper column 10U, which has been in a resting state during the lower column-depressurizing step, and the lower column 10B, which has been decompressed. After purging the inside of the lower column 10B, the gas introduced into the lower column 10B is led out from the lower column 10B and recovered in the raw material gas-storage tank 1 through the line L310. The gas recovered in the raw material gas-storage tank 1 is mixed with the raw material gas introduced from the line L31, and then used as mixed gas in the adsorption step described above.

### (5) Purge regeneration step

Next, in the purge regeneration step, the on-off valves V303, V309, V312, and V314 are closed, and the on-off valves V305, V307, and V310 are opened. Thereby, the nitrogen stored in the weak adsorbate component-storage tank 3 is introduced from the upper part of the upper column 10U through the line L308 as a countercurrent purge gas. The nitrogen introduced into the upper column 10U displaces and desorbs the xenon adsorbed to the adsorbent as it moves downward in the upper column 10U. The gas containing a relatively large amount of xenon desorbed from the adsorbent is led out from the upper column 10U and then recovered in the raw material gas-storage tank 1 through the lower column 10B and the line L310. The gas recovered in the raw material gas-storage tank 1 is mixed with the raw material gas introduced from the line L301, similar to the upper column-depressurizing step described above, and then used as the mixed gas in the adsorption step described above.

Note that, instead of the nitrogen stored in the weak adsorbate component-storage tank 3, the nitrogen led out from the upper column 10U in the above-mentioned adsorption step may be used as a countercurrent purge gas and introduced directly into the upper column 10U during the purge regeneration step.

### (6) Equalizing pressure-pressurizing step

Next, in the equalizing pressure-pressurizing step, the on-off valves V303, V307, V308, V310, V312, V314, and V315 are closed, and the on-off valve V309 is opened. When the equalizing pressure-pressurizing step is carried out in the lower column 10B and the upper column 10U, the above-mentioned rinsing step is carried out in the lower column 11B and the upper column 11U. In the equalizing pressure-pressurizing step, the nitrogen led out from the upper column 11U during the rinsing step is introduced into the upper column 10U and lower column 10B through the line L314.

Note that when returning from the "equalizing pressure-pressurizing step" to the "adsorption step", the on-off valve V301 is opened and the on-off valve V302 is closed. Next, the mixed gas led out from the raw material gas-storage tank 1 is compressed by the compressor 4 and then introduced into the lower part of the lower column 10B through the lines L315 and L304.

In the PSA apparatus 70 of the present embodiment, the on-off valve (second on-off device) V302 which is located on the line L303 (third flow path) connecting to the strong adsorbate component-storage tank 2 is located near the branching point T, and the volume of the line L303 from the inside of the on-off valve V302 to the branching point T is reduced. As a result, the amount of xenon remaining in the line L303 from the inside of the on-off valve V302 to the branching point T is reduced in the rinsing step. Accordingly, in the adsorption step, the mixed gas stored in the raw material gas-storage tank 1 can be introduced into the lower column 10 without fluctuation of the xenon concentration in the mixed gas.

In the PSA apparatus 70 of the present embodiment, the six steps described above are carried out sequentially in the lower column 11B and upper column 11U as well as in the lower column 10B and upper column 10U.

While the "adsorption step" - "rinsing step" are carried out in one adsorption column (lower column 10B and upper column 10U), the "lower column-depressurizing step" - "purge regeneration step" - "equalizing pressure-pressurizing step" are carried out in the other adsorption column (lower column 11B and upper column 11U).

Also, while the "lower column-depressurizing step" - "purge regeneration step" - "equalizing pressure-pressurizing step" are carried out in one adsorption column, the "adsorption step" - "rinsing step" are carried out in the other adsorption column.

According to the PSA apparatus 70 of the present embodiment, nitrogen and xenon are continuously concentrated by sequentially repeating the six steps described above between the lower and upper columns 10B and 10U, and the lower and upper columns 11B and 11U.

Note that in the PSA apparatus 70 of the present embodiment, the introduction of the raw material gas from the line L301 into the raw material gas-storage tank 1, the discharge of the nitrogen from the weak adsorbate component-storage tank 3 through the line L307, and leading out of the xenon from the strong adsorbate component-storage tank 2 through the line L313 are carried out continuously regardless of the steps described above.

According to the PSA apparatus 70 of the present embodiment, high purity xenon can be separated and recovered from the raw material gas.

Note that the purity of the xenon separated and recovered by the PSA apparatus 70 of the present embodiment is not particularly limited, but is preferably 99 volume % or more, more preferably 99.9 volume % or more, and even more preferably 99.95% by volume or more.

The PSA apparatus 70 of the present embodiment can be used as part of manufacturing equipment for semiconductor products or display apparatuses. According to the PSA apparatus 70 of the present embodiment, the exhaust gas discharged from the manufacturing equipment is used as the raw material gas, and after separating and recovering xenon contained in the raw material gas, high-purity xenon can be supplied to the manufacturing equipment.

Furthermore, when the PSA apparatus 70 of the present embodiment is used as a part of the above-mentioned manufacturing equipment, situations may frequently occur in which there is no need to supply xenon or in which the raw material gas (that is, exhaust gas from the manufacturing equipment) does not flow in. In such a situation, in the PSA apparatus 70 of the present embodiment, it is possible to always maintain a state in which the product gas (xenon) can be supplied while stopping the supply by returning the nitrogen discharged from the weak adsorbate component-storage tank 3 through the line L307 or the xenon led out from the strong adsorbate component-storage tank 2 through the line L313 into the raw material gas-storage tank 1.

As explained above, in the PSA apparatus 70 of the present embodiment, the on-off valve (first on-off device) V301 which is located on the line L302 (second flow path) which is connected to the raw material gas-storage tank 1 is located near the branching point T. Thereby, the volume of the line L302 from the inside of the on-off valve V301 to the branching point T can be reduced, so the amount of the gas remaining in the line can be reduced. Therefore, according to the PSA apparatus 70 of the present embodiment, when switching the line during operation, the amount of impurities (components other than xenon in the raw material gas) mixed into xenon is reduced, and high purity xenon (strong adsorbate component) can be separated and collected as a product.

Furthermore, in the PSA apparatus 70 of the present embodiment, the compressor 4 which is located on the line L315 connecting to the lower column 10B and the lower column 11B is located near the branching point T, and the valve V302 which is located on the line L303 (third flow path) connecting to the strong adsorbate component-storage tank 2 is located near the branching point T. Thereby, the volume of the line L315 at the primary side of the compressor 4, and the volume of the line L303 from the inside of the on-off valve 302 to the branching point T can be reduced. As a result, the amount of the gas remaining in the line from the compressor 4 to the branching point T, and the gas remaining in the line L303 from the on-off valve 302 to the branching point T can be reduced. Therefore, according to the PSA apparatus 70 of the present embodiment, when the raw material gas is introduced from the raw material gas-storage tank 1 into the compressor 4, or when the strong adsorbent component (gas) is introduced from the strong adsorbent components-storage tank 2 to the compressor 4, the amount of the gas remaining in a blocked space in the compressor 4, the on-off valve 301, and the on-off valve V212 can be further reduced.

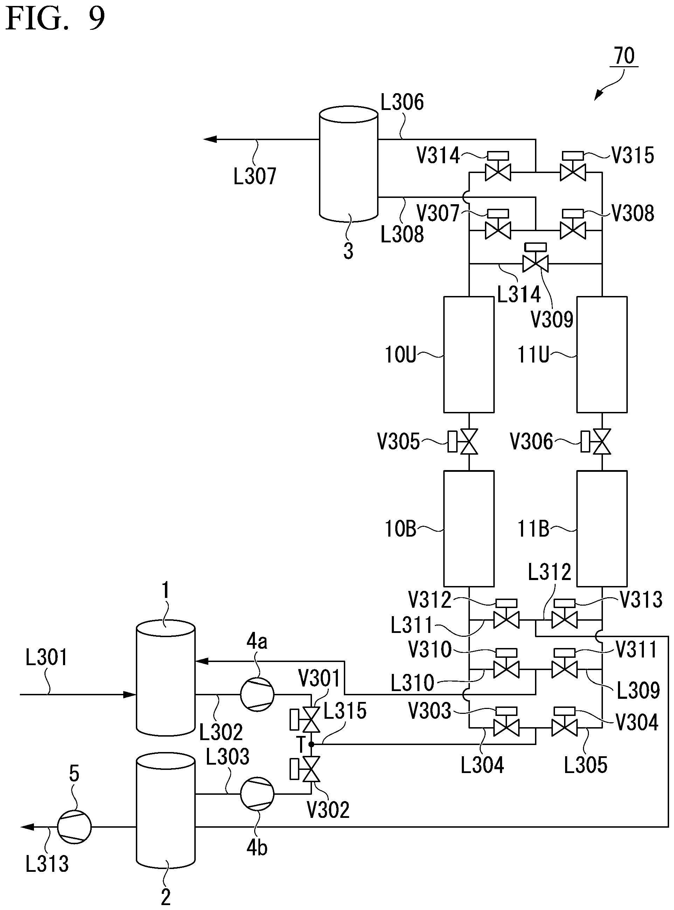

Note that the technical scope of the present invention is not limited to the above-described embodiments, and includes designs within the scope of the present invention. In the PSA apparatus 70 of the embodiment described above, the compressor 4 is provided on the line (first flow path) L315 connecting to the lower column 10B and the lower column 11B as an example. However, the present invention is not limited to this embodiment. For example, as shown in FIG. 9, instead of the compressor 4 located on the first flow path L315, both a compressor 4a located on the primary side of the on-off valve (first on-off valve) V301 of the line (second flow path) L302, and a second compressor 4b located on the primary side of on-off valve (second on-off valve) V302 of the flow path (third flow path) L303 may be provided.

### EXAMPLES

The present invention will be described in more detail with reference to Examples below, but the present invention is not limited to the Examples described below, and various modifications can be made without departing from the gist of the present invention.

### [Example 1]

Using the pressure swing adsorption gas separation apparatus 100 of which the schematic configuration is shown in FIG. 1, an experiment was carried out in which xenon was separated from a mixed gas containing xenon (strong adsorbate component) and nitrogen or argon (weak adsorbate component) as a raw material gas.

As the lower columns 10B, 11B and the upper columns 10U, 11U, cylindrical containers made of stainless steel (80A, inner diameter: 83.1 mm, adsorbent filling height: 500 mm) filled with 1.5 kg of activated carbon were used. The apparatus was operated at a cycle time of 600 seconds, and the time of each step and on-off valve control were carried out under the conditions shown in Table 1. The compressor 4 was a diaphragm compressor with a capacity of 20 L/min, and the compressor 5 was a diaphragm compressor with a capacity of 2 L/min. The gas volumes are the values at 0°C and 1 atmosphere.

The flow rate of the raw material gas introduced into the raw material gas-storage tank 1 was 2 L/min, and the xenon concentration was 50% by volume, 60% by volume, or 70% by volume. Further, the flow rate of xenon recovered from the strong adsorbate component-storage tank 2 was set to 0.2 L/min, and the flow rate of nitrogen or argon recovered from the weak adsorbate component-storage tank 3 was set to 1.8 L/min.

**[Table 1]**

| Lower column 10B | | Step a | → | → | Step b | Step b2 | Step c | Step d | Step e | → | Step e2 |
|---|---|---|---|---|---|---|---|---|---|---|---|
| Upper column 10U | | | | | | | | | | | |
| Lower column 11B | | Step c | Step d | Step e | → | Step e2 | Step a | → | → | Step b | Step b2 |
| Upper column 11U | | | | | | | | | | | |
| Time (sec.) | | 50 | 50 | 80 | 60 | 10 | 50 | 50 | 80 | 60 | 10 |
| Valve operation | V1 | O | O | O | X | X | O | O | O | X | X |
| | V2 | X | X | X | O | O | X | X | X | O | O |
| O:open | V3 | O | O | O | O | O | X | X | X | X | X |
| X:closed | V4 | X | X | X | X | X | O | O | O | O | O |
| | V5 | O | O | O | O | O | X | O | O | O | O |
| | V6 | X | O | O | O | O | O | O | O | O | O |
| | V7 | X | X | X | X | X | X | X | O | O | X |
| | V8 | X | X | O | O | X | X | X | X | X | X |
| | V9 | X | X | X | X | O | X | X | X | X | O |
| | V10' | X | X | X | X | X | X | O | O | O | X |
| | V11' | X | O | O | O | X | X | X | X | X | X |
| | V12' | X | X | X | X | X | O | X | X | X | X |
| | V13' | O | X | X | X | X | X | X | X | X | X |
| | V14' | O | O | O | O | X | X | X | X | X | X |
| | V15' | X | X | X | X | X | O | O | O | O | X |

After continuous operation for 24 hours under the above-mentioned operating conditions, the concentration of the nitrogen or argon led out from the line L7 and the concentration of the xenon led out from the line L13 settled down to approximately constant values, and almost reached a cyclical steady state. At this time, the concentration of the strong adsorbate component (Xe) in the strong adsorbate component-storage tank, the concentration of the strong adsorbate component (Xe) in the weak adsorbate component-storage tank, and the recovery rate of the strong adsorbate component (Xe) were as shown in Table 2.

**[Table 2]**

| Concentration of strong adsorbate component (Xe) in raw material gas-storage tank [% by volume] | Concentration of strong adsorbate component (Xe) in strong adsorbate component-storage tank [% by volume] | Concentration of strong adsorbate component (Xe) in weak adsorbate component-storage tank [ppm by volume] | Recovery rate of strong adsorbate component (Xe) [%] |
|---|---|---|---|
| 50 | 92.10 | 10 | 99.99 |
| 60 | 99.82 | 95 | 99.91 |
| 70 | 99.89 | 300 | 99.73 |

When using the pressure swing adsorption gas separation apparatus of the present invention, nitrogen or argon, which is the weak adsorbate component, was not introduced into the strong adsorbate component-storage tank 2, and xenon, which is the strong adsorbate component, could be separated with high purity (concentration of 99% by volume or more). Furthermore, the recovery rate of xenon, which is the strong adsorbate component, was also high.

### [Comparative example 1]

Using a pressure swing adsorption gas separation apparatus, the schematic configuration of which is shown in FIG. 10, that is, the pressure swing adsorption gas separation apparatus described in Patent Document 1 (Japanese Unexamined Patent Publication No. 2006-061831), an experiment was carried out to separate xenon from a mixed gas containing xenon (strong adsorbate component) and nitrogen (weak adsorbate component) as the raw material gas.

The pressure swing adsorption gas separation apparatus 101, the schematic configuration of which is shown in FIG. 10 includes the raw material gas-storage tank 1 which stores a mixed gas of a target component and at least one component other than the target component as the raw material gas, the strong adsorbate component-storage tank 2 which stores the strong adsorbate component, the weak adsorbate component-storage tank 3 which stores the weak adsorbate component, the compressor 4 which compresses the gas from the raw material gas-storage tank or the strong adsorbate component-storage tank 2, the compressor 5 which compress the gas from the strong adsorbate component-storage tank 2, and four adsorption columns of the lower column 10B, the lower column 11B, the upper column 10U, and the upper column 11U.

The line L1 is a gas flow path that introduces the raw material gas into raw material gas-storage tank 1. The line L2 is a gas flow path that introduces the gas from the raw material gas-storage tank 1 to the compressor 4. The line L3 is a gas flow path that introduces the gas from the strong adsorbate component-storage tank 2 to the compressor 4. The line L4 and the line L5 are gas flow paths that introduce the gas from the compressor 4 into each of the lower column 10B and lower column 11B. The line L6 is a gas flow path that introduces the gas from the upper columns 10U and 11U into the weak adsorbate component-storage tank 3, or introduces the gas in the weak adsorbate component-storage tank 3 into the upper columns 10U and 11U. The line L7 is a gas flow path that supplies the weak adsorbate component in the weak adsorbate component-storage tank 3 to the outside of the apparatus. The line L8 is a gas flow path that introduces the weak adsorbate component in the weak adsorbate component-storage tank 3 into the upper column 10U and upper column 11U as the countercurrent purge gas. The line L9 and the line L10 are gas flow paths that return the gas in the lower column 10B and lower column 11B into each of the raw material gas-storage tank 1 or the strong adsorbate component-storage tank 2. The line L11 is a gas flow path that returns the gas in the lower column 10B and lower column 11B into the raw material gas-storage tank 1. The line L12 is a gas flow path that returns the gas in the lower column 10B and lower column 11B into the strong adsorbate component-storage tank 2. The line L13 is a gas flow path that supplies the strong adsorbate component from the strong adsorbate component-storage tank 2 to the outside of the apparatus 101. The line L14 is an equalizing pressure line that equalizes pressure between the upper column 10U and the upper column 11U.

The pressure swing adsorption gas separation apparatus 101 shown in FIG. 10 can continuously separate xenon, which is the strong adsorbate component, and nitrogen, which is the weak adsorbate component, by sequentially repeating the seven steps described below in the lower column 10B, upper column 10U, lower column 11B, and upper column 11U.

### (1) Step a: Adsorption step

The mixed gas from the raw material gas-storage tank 1 was compressed by the compressor 4 and supplied into the lower column 10B through the line L2 and the line L4. Since the lower column 10B and the upper column 10U were connected by opening the on-off valve V5, the pressure increased in the lower column 10B and the upper column 10U in almost the same way. The mixed gas in the raw material gas-storage tank 1 was a mixture of the raw material gas introduced from the line L1 and the gas introduced from the lower column 10B or lower column 11B in the upper column-depressurizing step and the purge regeneration step, which are described later.

As the mixed gas supplied to the lower column 10B reached the upper part of the lower column 10B, xenon was preferentially adsorbed and nitrogen was concentrated in the gas phase. The concentrated nitrogen was introduced from the lower column 10B to the upper column 10U, and a trace amount of xenon contained in the concentrated nitrogen was further adsorbed in the upper column 10U. After the pressure in the upper column 10U became higher than the pressure in the weak adsorbate component-storage tank 3, the nitrogen further concentrated in the upper column 10U was led into the weak adsorbate component-storage tank 3 through the line L6. The nitrogen in weak adsorbate component-storage tank 3 was discharged from the line L7 to the outside of the apparatus at a flow rate corresponding to the flow rate of nitrogen contained in the raw material gas, and the remaining gas was used as the countercurrent purge gas in the purge regeneration step.

### (2) Step b: Rinsing step

By closing the on-off valve V1 and opening the on-off valve V2, the gas to be introduced into the lower column 10B was changed to xenon in the strong adsorbate component-storage tank 2. By introducing xenon from the strong adsorbate component-storage tank 2 into the lower column 10B, the nitrogen co-adsorbed in the adsorbent packed layer of the lower column 10B and the nitrogen existing in the voids between the adsorbents were forced out into the upper column 10U, and the inside of the lower column 10B was saturated with xenon. During this time, nitrogen was continuously introduced from the upper column 10U into the weak adsorbate component-storage tank 3. A portion of the nitrogen in the weak adsorbate component-storage tank 3 was discharged outside the apparatus system, similar to the adsorption step described above, and the remaining gas was used as the countercurrent purge gas.

### (3) Step c: Lower column-depressurizing step

The on-off valve V6 and the on-off valve V10 were closed, and on-off valve V11 and on-off valve V13 were opened. As a result, the xenon adsorbed in the lower column 11B in the adsorption step and the rinsing step described above was recovered in the strong adsorbate component-storage tank 2 through the line L10 and the line L12 due to the differential pressure between the lower column 11B and the strong adsorbate component-storage tank 2. The xenon recovered in the strong adsorbate component-storage tank 2 was compressed by the compressor 5 and collected as a product from the line L13. The remaining xenon was used as the countercurrent purge gas in the rinsing step described above. During this time, the upper column 11U was in a resting state by closing the on-off valve V6 and the on-off valve V15.

### (4) Step d: Upper column-depressurizing step

The on-off valve V11 was closed and the on-off valve V6 and on-off valve V10 were opened. Thereby, a pressure difference was created between the upper column 11U, which had been in a resting state in the above-described lower column-depressurizing step, and the lower column 11B, which had been decompressed, so that the gas in the upper column 11U flowed into the lower column 11B. The gas introduced into the lower column 11B was recovered in the raw material gas-storage tank 1 through the line L10 and the line L 11 while purging the inside of the lower column 11B. The gas recovered in the raw material gas-storage tank 1 was remixed with the raw material gas introduced from the line L1, and was again supplied into the lower column during the adsorption step described above.

### (5) Step e: Purge regeneration step

The on-off valve V8 was opened. The nitrogen stored in the weak adsorbate component-storage tank 3 was introduced into the upper column 11U through the line L8 as the countercurrent purge gas. The nitrogen introduced into the upper column 11U displaced and desorbed the adsorbed xenon as it moved toward the bottom of the adsorption column. The desorbed gas containing a relatively large amount of xenon was recovered in the raw material gas-storage tank 1 through the lower column 11B and the lines L10 and L11. The gas recovered in the raw material gas-storage tank 1 was mixed with the raw material gas introduced from the line L1 in the same way as in the upper column-depressurizing step described above, and was again supplied into the lower column during the adsorption step described above. As nitrogen used for the countercurrent purge gas, the nitrogen led out from the upper column 10U in the above-mentioned adsorption step or the rinsing step could be introduced directly into the upper column 10U during the purge regeneration step without passing through the weak adsorbate component-storage tank 3.

### (6) Equalizing pressure-depressurizing step

The on-off valve V14 was closed and the on-off valve V9 was opened. The gas in the upper column 10U was introduced into the upper column 11U through the line L14 due to the pressure difference between the upper column 10U and the upper column 11U (equalizing-depressurizing operation). As a result, the pressure in the upper column 10U decreased, so that the gas in the lower column 10B was led out into the upper column 10U. By this operation, a small amount of nitrogen remaining in the upper part of the lower column 10B was swept away by the xenon desorbed by the reduced pressure and introduced into the upper column 10U. During this time, the xenon was continuously introduced from the strong adsorbate component-storage tank 2.

### (7) Equalizing pressure-pressurizing step

The on-off valve V13 and the on-off valve V8 were closed, and the on-off valve V9 was opened. As a result, the gas in the upper column 10U was introduced into the upper column 11U (equalizing pressure-pressurizing operation). Since the gas introduced into the upper column 11U had a high nitrogen concentration, the xenon in the upper column 11U could be forced down to the lower part of the upper column and the lower column 11B.

While the lower column 10B and the upper column 10U carried out three steps of the adsorption step, rinsing step, and equalizing pressure-depressurizing step, the lower column 11B and the upper column 11U carried out four steps of the lower column-depressurizing step, upper column-depressurizing step, purge regeneration step, and equalizing pressure-pressurizing step. While the lower column 11B and the upper column 11U carried out three steps of the adsorption step, rinsing step, and equalizing pressure-depressurizing step, the lower column 10B and the upper column 10U carried out four steps of the lower column-depressurizing step, upper column-depressurizing step, purge regeneration step, and equalizing pressure-pressurizing step.

As the lower columns 10B and 11B and the upper columns 10U and 11U, cylindrical containers made of stainless steel (80A, inner diameter: 83.1 mm, adsorbent filling height: 500 mm) filled with 1.5 kg of activated carbon were used. The apparatus was operated at a cycle time of 500 seconds, and the time of each step and the on-off valve control were carried out under the conditions shown in Table 3. The compressor 4 was a diaphragm compressor with a capacity of 20 L/min, and the compressor 5 was a diaphragm compressor with a capacity of 2 L/min. The gas volumes are the values at 0° C. and 1 atmosphere.

The flow rate of the raw material gas introduced into the raw material gas-storage tank 1 was 2 L/min, and the xenon concentration was 50% by volume, 60% by volume, or 70% by volume. Further, the flow rate of the xenon recovered from the strong adsorbate component-storage tank 2 was set to 0.2 L/min, and the flow rate of the nitrogen or argon recovered from the weak adsorbate component-storage tank 3 was set to 1.8 L/min.

**[Table 3]**

| | | Step | | | | | | | | | |
|---|---|---|---|---|---|---|---|---|---|---|---|
| Lower column 10B | | Adsorption step | → | → | Rinsing step | Equalizing pressure-depressurizing step | Lower column depressurizing step | Upper column depressurizing step | Purge regeneration step | → | Equalizing pressure-pressurizing step |
| Upper column 10U | | | | | | | | | | | |
| Lower column 11B | | Lower column depressurizing step | Upper column depressurizing step | Purge regeneration step | → | Equalizing pressure-pressurizing step | Adsorption step | → | → | Rinsing step | Equalizing pressuredepressurizin g step |
| Upper column 11U | | | | | | | | | | | |
| Time (sec.) | | 50 | 50 | 80 | 60 | 10 | 50 | 50 | 80 | 60 | 10 |
| Valve operation | V1 | O | O | O | X | X | O | O | O | X | X |
| | V2 | X | X | X | O | O | X | X | X | O | O |
| O: open | V3 | O | O | O | O | O | X | X | X | X | X |
| X: closed | V4 | X | X | X | X | X | O | O | O | O | O |
| | V5 | O | O | O | O | O | X | O | O | O | O |
| | V6 | X | O | O | O | O | O | O | O | O | O |
| | V7 | X | X | X | X | X | X | X | O | O | X |
| | V8 | X | X | O | O | X | X | X | X | X | X |
| | V9 | X | X | X | X | O | X | X | X | X | O |
| | V10 | X | O | O | O | X | X | O | O | O | X |
| | V11 | O | X | X | X | X | O | X | X | X | X |
| | V12 | X | X | X | X | X | O | O | O | O | X |
| | V13 | O | O | O | O | X | X | X | X | X | X |
| | V14 | O | O | O | O | X | X | X | X | X | X |
| | V15 | X | X | X | X | X | O | O | O | O | X |

After continuous operation for 24 hours under the above-mentioned operating conditions, the concentration of the nitrogen or argon led out from the line L7 and the concentration of the xenon concentration led out from the line L13 settled down to approximately constant values, and almost reached a cyclical steady state. At this time, the concentration of the strong adsorbate component (Xe) in the strong adsorbate component-storage tank, the concentration of the strong adsorbate component (Xe) in the weak adsorbate component-storage tank, and the recovery rate of the strong adsorbate component (Xe) were as shown in Table 4.

**[Table 4]**

| Concentration of strong adsorbate component (Xe) in raw material gas-storage tank [*%* by volume] | Concentration of strong adsorbate component (Xe) in strong adsorbate component-storage tank [*%* by volume] | Concentration of strong adsorbate component (Xe) in weak adsorbate component-storage tank [ppm by volume] | Recovery rate of strong adsorbate component (Xe) [%] |
|---|---|---|---|
| 50 | 90.10 | 10 | 99.99 |
| 60 | 98.69 | 95 | 99.91 |
| 70 | 98.81 | 310 | 99.72 |

When the pressure swing adsorption gas separation apparatus described in Patent Document 1 (Japanese Unexamined Patent Publication No. 2006-061831) was used, nitrogen, which is a weak adsorbate component, was introduced into the strong adsorbate component-storage tank 2, and the strong adsorbate component could not be separated with high purity (concentration 99% by volume or more).

### [Example 2]

Using the PSA apparatus 50 shown in FIG. 6 and controlling the on-off valve as shown in Table 5 below, a product gas was separated and recovered from the raw material gas. Note that, in Table 5, "O" indicates that the valve was opened, and a blank column indicates that the valve was closed.

The configuration of the PSA apparatus 50 was as follows.

| | |
|---|---|
| Lower column (10B, 11B), and upper column (10U, 11U): | Stainless steel 80A (inner diameter 83.1 mm), adsorbent filling height: 500 mm |
| Adsorbent: | Activated carbon (manufactured by Osaka Gas Chemical Co., Ltd.), each filled with 1.5 kg |
| Compressor 4: | Diaphragm compressor (manufactured by KNF, discharge rate: 20 L/min) |
| Compressor 5: | Diaphragm compressor (manufactured by KNF, discharge rate: 0.2 L/min) |
| | (All below at 0°C and atmospheric pressure) |
| Raw material gas: | xenon (Xe) + nitrogen |
| Amount of the raw material gas introduced from the line L201 into the raw material gas-storage tank 1: | 2.0 L/min |
| Strong adsorbate component: | xenon |
| Amount of the strong adsorbate component-storage tank 2 introduced into the line L213: | 0.2 L/min |
| Weak adsorbate component: | nitrogen |
| Amount of the weak adsorbate component-storage tank3 introduced into the line L207: | 1.8 L/min |

**[Table 5]**

| Lower column 10B | Adsorption step | | | Rinsing step | Lower column depressurizing sep sestep | Upper column depressurizing step | Purge regeneration step | Equalizing pressure-pressurizing step |
|---|---|---|---|---|---|---|---|---|
| Upper column 10U | | | | | | | | |
| Lower column 11B | Lower column depressurizing step | Upper column depressurizing step | Purge regeneration step | Equalizing pressure-pressurizing step | Adsorption step | | | Rinsing step |
| Upper column 11U | | | | | | | | |
| Time (sec.) | 45 | 95 | 65 | 95 | 45 | 95 | 65 | 95 |
| V201 | O | O | O | | O | O | O | |
| V202 | | | | O | | | | O |
| V203 | O | O | O | O | | | | |
| V204 | | | | | O | O | O | O |
| V205 | O | O | O | O | | O | O | O |
| V206 | | O | O | O | O | O | O | O |
| V207 | | | | | | | O | |
| V208 | | | O | | | | | |
| V209 | | | | O | | | | O |
| V210 | | | | | | O | O | |
| V211 | | O | O | | | | | |
| V212 | | | | | O | | | |
| V213 | O | | | | | | | |
| V214 | O | O | O | | | | | |
| V215 | | | | | O | O | O | |

As the on-off valves V210, V211, V212, and V213, diaphragm two-way valves (metal diaphragm on-off valve manufactured by Fujikin; FPR-ND-71-9.52) were used and operated under the conditions shown in Table 5 above.

The results are shown in Table 6 below.

In addition, the total of the volume of the pipe that is the line L211 between the on-off valve V212 and the branching point P and the volume of the inside of the on-off valve V212 was 19 mL. This total volume was 0.10% by volume of the gas volume sucked by the compressor 4 per minute.

In addition, the total of the volume of the pipe that is the line L212 between the on-off valve V213 and the branching point Q, and the volume of the inside of the on-off valve V213, the total of the volume of the pipe that is the line L209 between the on-off valve V210 and the branching point R and the volume of the inside of the on-off valve V210, and the total of the volume of the pipe that is the line L210 between the on-off valve V211 and the branching point S and the volume of the inside of the on-off valve V211 were 19 mL.

**[Table 6]**

| Strong adsorbate component | Xenon (Xe) 0.2 L/min | | |
|---|---|---|---|
| Weak adsorbate component | Nitrogen (N₂) 1.8 L/min | | |
| Concentration of strong adsorbate component (Xe) in raw material gas-storage tank [% by volume] | Concentration of strong adsorbate component (Xe) in strong adsorbate component-storage tank [*%* by volume] | Concentration of strong adsorbate component (Xe) in weak adsorbate component-storage tank [ppm by volume] | Recovery rate of strong adsorbate component (Xe) [*%*] |
| 50 | 92.1 | 10 | 99.99 |
| 60 | 99.82 | 94 | 99.92 |
| 70 | 99.89 | 290 | 99.74 |

As shown in Table 6, it was found that the pressure swing adsorption gas separation apparatus of the present invention can separate the strong adsorbate component with high purity. In particular, when the concentration of the strong adsorbate component in the raw material gas-storage tank was 60% or more, the strong adsorbate component (xenon) could be separated with high purity of 99% by volume or more.

### <Comparative example 2>

As a comparative example of the present invention, a separation experiment was carried out in the same manner as in Example 2 using a conventional apparatus (the apparatus of Patent Document 1 mentioned above).

Moreover, the total of the volume of the pipe and the volume inside the on-off valve in each the line was 53 mL. This total volume was 0.27% by volume with respect to the gas volume sucked by the compressor 4 per minute.

The results are shown in Table 7 below.

**[Table 7]**

| Strong adsorbate component | Xenon (Xe) 0.2 L/min | | |
|---|---|---|---|
| Weak adsorbate component | Nitrogen (N₂) 1.8 L/min | | |
| Concentration of strong adsorbate component (Xe) in raw material gas-storage tank [% by volume] | Concentration of strong adsorbate component (Xe) in strong adsorbate component-storage tank [*%* by volume] | Concentration of strong adsorbate component (Xe) in weak adsorbate component-storage tank [ppm by volume] | Recovery rate of strong adsorbate component (Xe) [*%*] |
| 50 | 90.1 | 10 | 99.99 |
| 60 | 98.69 | 95 | 99.91 |
| 70 | 98.81 | 310 | 99.72 |

As shown in Table 7, in the conventional apparatus, the total of the volume of the pipe in each the line and the volume of the inside of the on-off valve was 53 mL, so the concentration of the strong adsorbate component (xenon) was less than 99% by volume.

### [Example 3]

As the on-off valves V210, V211, V212, and V213, diaphragm three-way diverter valves (manufactured by Fujikin, metal diaphragm on-off valve: FPR-NDTB-71-9.52) were used and operated under the conditions shown in Table 5 above.

The results are shown in Table 8 below.

In addition, the total of the volume of the pipe that is the line L211 between the on-off valve V212 and the branching point P and the volume of the inside of the on-off valve V212 was 5 mL. This total volume was 0.03% by volume of the gas volume sucked by the compressor 4 per minute.

In addition, the total of the volume of the pipe that is the line L212 between the on-off valve V213 and the branching point Q and the volume of the inside of the on-off valve V213, the total of the volume of the pipe that is the line L209 between the on-off valve V210 and the branching point R and the volume of the inside of the on-off valve V210, and the total of the volume of the pipe that is the line L210 between the on-off valve V211 and the branching point S and the volume of the inside of the on-off valve V211 were 5 mL.

**[Table 8]**

| Strong adsorbate component | Xenon (Xe) 0.2 L/min | | |
|---|---|---|---|
| Weak adsorbate component | Nitrogen (N₂) 1.8 L/min | | |
| Concentration of strong adsorbate component (Xe) in raw material gas-storage tank [% by volume] | Concentration of strong adsorbate component (Xe) in strong adsorbate component-storage tank [% by volume] | Concentration of strong adsorbate component (Xe) in weak adsorbate component-storage tank [ppm by volume] | Recovery rate of strong adsorbate component (Xe) [%] |
| 50 | 96.5 | 10 | 99.99 |
| 60 | 99.97 | 95 | 99.91 |
| 70 | 99.98 | 300 | 99.73 |

As shown in Table 8, it was found that the pressure swing adsorption gas separation apparatus of the present invention could separate the strong adsorbate component with even higher purity by adjusting the total volume of each pipe in which the gas components remained at 5 mL. In particular, when the concentration of the strong adsorbate component in the raw material gas-storage tank was 60% or more, the strong adsorbate component (xenon) could be separated with high purity of 99.95% by volume or more.

### [Example 4]

As the on-off valves V210, V211, V212, and V213, three-way ball on-off valves (manufactured by SwageLok; SS-63XLTS8-A30S4) were used and operated under the conditions shown in Table 5 above.

The results are shown in Table 9 below.

In addition, the total of the volume of the pipe that is the line L211 between the on-off valve V212 and the branching point P and the volume of the inside of the on-off valve V212 was 5 mL.

In addition, the total of the volume of the pipe that is the line L212 between the on-off valve V213 and the branching point Q and the volume of the inside of the on-off valve V213, the total of the volume of the pipe that is the line L209 between the on-off valve V210 and the branching point R and the volume of the inside of the on-off valve V210, and the total of the volume of the pipe that is the line L210 between the on-off valve V211 and the branching point S and the volume of the inside of the on-off valve V211 were 5 mL.

**[Table 9]**

| Strong adsorbate component | Xenon (Xe) 0.2 L/min | | |
|---|---|---|---|
| Weak adsorbate component | Nitrogen (N₂) 1.8 L/min | | |
| Concentration of strong adsorbate component (Xe) in raw material gas-storage tank [% by volume] | Concentration of strong adsorbate component (Xe) in strong adsorbate component-storage tank [*%* by volume] | Concentration of strong adsorbate component (Xe) in weak adsorbate component-storage tank [ppm by volume] | Recovery rate of strong adsorbate component (Xe) [*%*] |
| 50 | 96.5 | 10 | 99.99 |
| 60 | 99.97 | 95 | 99.91 |
| 70 | 99.98 | 300 | 99.73 |

As shown in Table 9, it was found that even when the three-way ball on-off valve was used as the on-off valve, the pressure swing adsorption gas separation apparatus of the present invention could separate the strong adsorbate component with high purity comparable to that in Example 3 by adjusting the total volume of each pipe in which the gas components remained at 5 mL. That is, when the concentration of the strong adsorbate component in the raw material gas-storage tank was 60% or more, the strong adsorbate component (xenon) could be separated with high purity of 99.95% by volume or more.

### [Example 5]

The operation was carried out under the same conditions as in Example 3, except that argon was used instead of nitrogen as the weak adsorbate component contained in the raw material gas.

The results are shown in Table 10 below.

**[Table 10]**

| Strong adsorbate component | Xenon (Xe) 0.2 L/min | | |
|---|---|---|---|
| Weak adsorbate component | Argon (Ar) 1.8 L/min | | |
| Concentration of strong adsorbate component (Xe) in raw material gas-storage tank [% by volume] | Concentration of strong adsorbate component (Xe) in strong adsorbate component-storage tank [% by volume] | Concentration of strong adsorbate component (Xe) in weak adsorbate component-storage tank [ppm by volume] | Recovery rate of strong adsorbate component (Xe) [%] |
| 50 | 98.50 | 100 | 99.91 |
| 60 | 99.98 | 110 | 99.90 |
| 70 | 99.98 | 1000 | 99.10 |

As shown in Table 10, it was found that even when argon was used as the weak adsorbate component, the pressure swing adsorption gas separation apparatus of the present invention could separate the strong adsorbate component with high purity compatible to that in Example 3 by adjusting the total volume of each pipe in which the gas components remained at 5 mL. That is, when the concentration of the strong adsorbate component in the raw material gas-storage tank was 60% or more, the strong the adsorbate component (xenon) could be separated with high purity of 99.95% by volume or more.

### [Comparative Example 3]

The operation was carried out under the same conditions as in Example 3, except that argon was used instead of nitrogen as the weak adsorbate component contained in the raw material gas.

The results are shown in Table 11 below.

**[Table 11]**

| Strong adsorbate component | Xenon (Xe) 0.2 L/min | | |
|---|---|---|---|
| Weak adsorbate component | Argon (Ar) 1.8 L/min | | |
| Concentration of strong adsorbate component (Xe) in raw material gas-storage tank [% by volume] | Concentration of strong adsorbate component (Xe) in strong adsorbate component-storage tank [% by volume] | Concentration of strong adsorbate component (Xe) in weak adsorbate component-storage tank [ppm by volume] | Recovery rate of strong adsorbate component (Xe) [%] |
| 50 | 89.2 | 100 | 99.91 |
| 60 | 98.75 | 110 | 99.90 |
| 70 | 98.83 | 1000 | 99.10 |

As shown in Table 11, even when argon was used instead of nitrogen as the weak adsorbate component contained in raw material gas, in the conventional apparatus, the total of the volume of the pipe in each line and the volume of the inside of the on-off valve was 53 mL, so the concentration of the strong adsorbate component (xenon) was less than 99% by volume.

### [Example 6]

Using the PSA apparatus 70 shown in FIG. 8 and controlling the on-off valve as shown in Table 12 below, a product gas was separated and recovered from the raw material gas. Note that, in Table 12, "O" indicates that the valve was opened, and a blank column indicates that the valve was closed.

The configuration of the PSA apparatus 70 was as follows.

| | |
|---|---|
| Lower column (10B, 11B), and upper column (10U, 11U): | Stainless steel 80A (inner diameter 83.1mm), adsorbent filling height: 500 mm |
| Adsorbent: | Activated carbon, each filled with 1.5 kg |
| Compressor 4: | Diaphragm compressor (discharge rate: 20 L/min) |
| Compressor 5: | Diaphragm compressor (discharge rate: 0.2 L/min) (All below at 0°C and atmospheric pressure) |
| Raw material gas: | xenon (Xe) + nitrogen |
| Amount of the raw material gas introduced from the line L301 into the raw material gas-storage tank 1: | 2.0 L/min |
| Strong adsorbate component: | xenon |
| Amount of the strong adsorbate component-storage tank 2 introduced into line L313: | 0.2 L/min |
| Weak adsorbate component: | nitrogen |
| Amount of the weak adsorbate component-storage tank 3 introduced into line L307: | 1.8 L/min |

**[Table 12]**

| Lower column 10B Upper column 10U | Adsorption step | | | Rinsing step | Lower column depressurizing step | Upper column depressurizing step | Purge regeneration step | Equalizing pressure-pressurizing step |
|---|---|---|---|---|---|---|---|---|
| Lower column 11B Upper column 11U | Lower column depressurizing step | Upper column depressurizing step | Purge regeneration step | Equalizing pressure-pressurizing step | Adsorption step | | | Rinsing step |
| Time (sec.) | 45 | 95 | 65 | 95 | 45 | 95 | 65 | 95 |
| V301 | O | O | O | | O | O | O | |
| V302 | | | | O | | | | O |
| V303 | O | O | O | O | | | | |
| V304 | | | | | O | O | O | O |
| V305 | O | O | O | O | | O | O | O |
| V306 | | O | O | O | O | O | O | O |
| V307 | | | | | | | O | |
| V308 | | | O | | | | | |
| V309 | | | | O | | | | O |
| V310 | | | | | | O | O | |
| V311 | | O | O | | | | | |
| V312 | | | | | O | | | |
| V313 | O | | | | | | | |
| V314 | O | O | O | | | | | |
| V315 | | | | | O | O | O | |

Xenon was separated and recovered by changing the distance on the line 302 from the on-off valve V301 to the branching point T. The operation was carried out by changing the volume of the pipe. The results are shown in Table 13.

**[Table 13]**

| | Volume of pipe of line L302 from on-off valve 301 to branching point T | Flow rate of compressor 4 | Purity of product Xe | Xe recovery percentage |
|---|---|---|---|---|
| Experiment 1 | 10 mL | 20 L/min | 99.9 *%* by volume | 99 % |
| Experiment 2 | 100 mL | 20 L/min | 99.5 by volume | 99 % |
| Experiment 3 | 200 mL | 20 L/min | 99.1 by volume | 99 % |
| Experiment 4 | 500 mL | 20 L/min | 94.5 by volume | 99 % |

As shown in Table 13, in Experiments 1 to 3, the volume of the line L302 from the on-off valve V301 to the branching point T was 200 m or less, and was 1 % or less with respect to the gas volume sucked by the compressor 4 per minute. Therefore, the concentration of the product Xe was 99% by volume or more.

In addition, in Experiment 1, the volume of the line L302 from the on-off valve V301 to the branching point T was 10 mL, and was 0.05% or less with respect to the gas volume sucked in by the compressor 4 per minute. Therefore, the concentration of the product Xe was 99.9% by volume or more.

On the other hand, in Experiment 4, the volume of the line L302 from the on-off valve V301 to the branching point T was 500 mL, and was more than 1% (2.5%) with respect to the gas volume sucked by the compressor 4 per minute. Therefore, the concentration of the product Xe was less than 99.9% by volume (94.5*%* by volume).

### [Example 7]

In Experiment 1 described above, when a diaphragm type three-way diverter valve (Fujikin Metal Diaphragm On-Off Valve: FPR-NDTB-71-9.52) was further used as the on-off valve V301, the total of the volume of the pipe from the on-off valve V301 to the branching point T of the line L302 was 5 mL.

As a result of operating under the conditions shown in Table 12, the purity of the product Xe was 99.95% and the Xe recovery percentage was 99%.

### INDUSTRIAL APPLICABILITY

The pressure swing adsorption gas separation apparatus of the present invention can be effectively used as an apparatus which efficiently recovers and recycles high value-added gases such as xenon at high concentration and high recovery rate from a mixed gas which has been supplied to and discharged from manufacturing equipment for semiconductor products and display apparatuses. By combining the pressure swing adsorption gas separation apparatus of the present invention with the circulation cycle formed by the manufacturing equipment for semiconductor products and display apparatuses, the cost of expensive atmospheric gases used in semiconductor manufacturing apparatuses and the like can be significantly reduced.

### EXPLANATION OF REFERENCE NUMERALS

1 raw material gas-storage tank
2 strong adsorbate component-storage tank
3 weak adsorbate component-storage tank
4, 5 compressor
10B, 11B lower column
10U, 11U upper column
L1, L2, L3, L4, L5, L6, L7, L8, L9, L9', L10, L10', L11, L11', L12, L12', L13, L14, L15, L16, L17 line (flow path )
V1, V2, V3, V4, V5, V6, V7, V8, V9, V10, V10', V11, V11', V12, V12', V13, V13', V14, V15 on-off valve (on-off device )
100, 101 pressure swing adsorption gas separation apparatus (PSA apparatus)
50, 60, 70 pressure swing adsorption gas separation apparatus (PSA apparatus)
V201 to V215 on-off valve (on-off device)
L201 to L217 line (flow path)
P, Q, R, S, T branching point
V301 to V315 on-off valve (on-off device)
L301 to L315 line (flow path)

## Claims

1. A pressure swing adsorption gas separation apparatus which separates a main component from a raw material gas, which is a mixed gas containing at least two main components using a pressure swing adsorption gas separation method,
wherein the separation apparatus comprises:
at least one adsorption column that is filled with an adsorbent that readily adsorbs at least one main component of the raw material gas and hardly adsorbs at least one main component of the raw material gas;
a raw material gas-storage tank that stores the raw material gas;
a strong adsorbate component-storage tank that stores readily adsorbable components that are desorbed from the adsorbent in the adsorption column;
at least one compressor that sucks and compresses at least one of gas in the raw material gas-storage tank and gas in the strong adsorbate component-storage tank in order to introduce at least one of the gas in the raw material gas-storage tank and the gas in the strong adsorbate component-storage tank into one of the adsorption column;
a gas flow path that returns gas discharged from the adsorption column into the strong adsorbate component-storage tank; and
a gas flow path that returns gas discharged from the adsorption column into the raw material gas-storage tank, and
wherein the gas flow path that returns the gas discharged from the adsorption column into the strong adsorbate component-storage tank is a first exclusive flow path of which a first end is connected to the adsorption column and a second end is only connected to the strong adsorbate component-storage tank.

2. The pressure swing adsorption gas separation apparatus according to Claim 1,
wherein the first end of the first exclusive flow path is connected to the adsorption column through a gas flow path which introduces gas from the compressor into the adsorption column.

3. The pressure swing adsorption gas separation apparatus according to Claim 1,
wherein the pressure swing adsorption gas separation apparatus further comprises a second exclusive flow path of which a first end is connected to the adsorption column and a second end is only connected to the raw material gas-storage tank.

4. The pressure swing adsorption gas separation apparatus according to Claim 3,
wherein the first end of the second exclusive flow path is connected to the adsorption column through a gas flow path that introduces gas from the compressor into the adsorption column.

5. The pressure swing adsorption gas separation apparatus according to Claim 1,
wherein the pressure swing adsorption gas separation apparatus comprises:
a first flow path that is located between the compressor and the adsorption column;
a second flow path that branches from the first flow path at a first branching point and is located between the first branching point and the strong adsorbate component-storage tank; and
a first on-off device located in the second flow path, and
wherein the first on-off device is located near the first branching point.

6. The pressure swing adsorption gas separation apparatus according to Claim 5,
wherein the first branching point is located near the adsorption column.

7. The pressure swing adsorption gas separation apparatus according to Claim 5 or 6,
wherein the pressure swing adsorption gas separation apparatus further comprises:
a third flow path that is branched from the first flow path at a second branching point and located between the second branching point and the raw material gas-storage tank; and
a second on-off device that is located in the third flow path, and
wherein the second on-off device is located near the second branching point.

8. The pressure swing adsorption gas separation apparatus according to Claim 7,
wherein the second branching point is located near the adsorption column.

9. The pressure swing adsorption gas separation apparatus according to Claim 1,
wherein the pressure swing adsorption gas separation apparatus comprises:
a flow path that is branched at a branching point into a first flow path connecting with the adsorption column, a second flow path connecting with the raw material gas-storage tank, and a third flow path connecting with the strong adsorbate component-storage tank;
a compressor located in the flow path; and
a first on-off device located in the second flow path, and
wherein the first on-off device is located near the branching point.

10. The pressure swing adsorption gas separation apparatus according to Claim 9,
wherein the volume of the second flow path from the inside of the first on-off device to the branching point is 1% by volume or less with respect to a gas volume sucked by the compressor per minute.

11. The pressure swing adsorption gas separation apparatus according to Claim 9 or 10,
wherein the pressure swing adsorption gas separation apparatus further comprises a second on-off device that is located in the third flow path, and
wherein the third flow path is located near the branching point.

12. The pressure swing adsorption gas separation apparatus according to any one of Claims 9 to 11,
wherein the compressor is located near the branching point in the first flow path.

13. The pressure swing adsorption gas separation apparatus according to Claim 11,
wherein the compressors comprise a first compressor that is located on a primary side of the first on-off device in the second flow path, and a second compressor that is located on a primary side of the second on-off device in the third flow path.

14. The pressure swing adsorption gas separation apparatus according to any one of Claims 1 to 13,
wherein the raw material gas contains at least one strong adsorbate component selected from the group consisting of xenon and krypton, and at least one weak adsorbate component selected from the group consisting of oxygen, nitrogen, argon, helium, neon and hydrogen.
